# EUROPEAN PATENT SPECIFICATION

(11) **EP 4 167 212 B1**
(45) Date of publication and mention of the grant of the patent: **01.10.2025**
(21) Application number: 22212824.1
(22) Date of filing: 27.05.2016
(51) Int. Cl.: G09B 23/28, G09B 23/34

(54) **SURGICAL TRAINING MODEL FOR LAPAROSCOPIC PROCEDURES**
CHIRURGISCHES TRAININGSMODELL FÜR LAPAROSKOPISCHE EINGRIFFE
MODÈLE D'ENTRAÎNEMENT CHIRURGICAL POUR INTERVENTIONS LAPAROSCOPIQUES

(30) Priority: 27.05.2015 US 201562167129 P; 06.04.2016 US 201662318902 P
(43) Date of publication of application: 19.04.2023
(62) Divisional of application: 16728193.0
(73) Proprietor: Applied Medical Resources Corporation, Rancho Santa Margarita, CA 92688 (US)
(72) Inventor: HOFSTETTER, Gregory K, Rancho Santa Margarita, 92688 (US); BRESLIN, Tracy, Rancho Santa Margarita, 92688 (US); SALEH, Khodr, Rancho Santa Margarita, 92688 (US); FELSINGER, Natasha, Rancho Santa Margarita, 92688 (US); BLACK, Katie, Rancho Santa Margarita, 92688 (US); DRAGANOV, Milan, Rancho Santa Margarita, 92688 (US)
(74) Representative: Dolleymores

(56) References cited:
- US-A- 5 947 743
- US-A1- 2014 051 049
- US-A1- 2014 087 348

## Description

### Field of the Invention

This application relates to a suture training model.

### Background of the Invention

Medical students as well as experienced doctors learning new surgical techniques must undergo extensive training before they are qualified to perform surgery on human patients. The training must teach proper techniques employing various medical devices for cutting, penetrating, clamping, grasping, stapling, cauterizing and suturing a variety of tissue types. The range of possibilities that a trainee may encounter is great. For example, different organs and patient anatomies and diseases are presented. The thickness and consistency of the various tissue layers will also vary from one part of the body to the next and from one patient to another. Different procedures demand different skills. Furthermore, the trainee must practice techniques in various anatomical environs that are influenced by factors such as the size and condition of the patient, the adjacent anatomical landscape and the types of targeted tissues and whether they are readily accessible or relatively inaccessible.

Numerous teaching aids, trainers, simulators and model organs are available for one or more aspects of surgical training and examples of training devices for practicing sutures are disclosed in patent documents US 2014/087348 A1, US 5,947,743A and US 2014/051049 A1. However, there is a need for models or simulated tissue elements that are likely to be encountered in and that can be used for practicing endoscopic and laparoscopic, minimally invasive surgical procedures. In laparoscopic surgery, a trocar or cannula is inserted to access a body cavity and to create a channel for the insertion of a camera such as a laparoscope. The camera provides a live video feed capturing images that are then displayed to the surgeon on one or more monitors. At least one additional small incision is made through which another trocar/cannula is inserted to create a pathway through which surgical instruments can be passed for performing procedures observed on the monitor. The targeted tissue location such as the abdomen is typically enlarged by delivering carbon dioxide gas to insufflate the body cavity and create a working space large enough to accommodate the scope and instruments used by the surgeon. The insufflation pressure in the tissue cavity is maintained by using specialized trocars. Laparoscopic surgery offers a number of advantages when compared with an open procedure. These advantages include reduced pain, reduced blood and shorter recovery times due to smaller incisions.

Laparoscopic or endoscopic minimally invasive surgery requires an increased level of skill compared to open surgery because the target tissue is not directly observed by the clinician. The target tissue is observed on monitors displaying a portion of the surgical site that is accessed through a small opening. Therefore, clinicians need to practice visually determining tissue planes, three-dimensional depth perception on a two-dimensional viewing screen, hand-to-hand transfer of instruments, suturing, precision cutting and tissue and instrument manipulation. Typically, models simulating a particular anatomy or procedure are placed in a simulated pelvic trainer where the anatomical model is obscured from direct visualization by the practitioner. Ports in the trainer are employed for passing instruments to practice techniques on the anatomical model hidden from direct visualization. Simulated pelvic trainers provide a functional, inexpensive and practical means to train surgeons and residents the basic skills and typical techniques used in laparoscopic surgery such as grasping, manipulating, cutting, tying knots, suturing, stapling, cauterizing as well as how to perform specific surgical procedures that utilized these basic skills. Simulated pelvic trainers are also effective sales tools for demonstrating medical devices required to perform these laparoscopic procedures.

One of the techniques mentioned above that requires practice in endoscopic or laparoscopic minimally invasive surgery is the passing of sutures and suturing which requires the clinician to develop skills such as three-dimensional depth perception and hand-to-hand transfer of a needle and suture while the target tissue and instruments are observed on a two-dimensional video monitor. Therefore, it is desirable to present a model suitable for practicing suturing and, in particular, there is a need for a model that isolates a particular step of a procedure for the trainee such as the passing of sutures for the clinician to practice in a simulated laparoscopic environment. The laparoscopic training model is removably placed inside a simulated laparoscopic environment such as a laparoscopic trainer in which it is at least partially obscured from direct visualization. A camera and monitor provide visualization to the practitioner. After a technique is practiced, it is furthermore desirable that such a model permits repeatable practice with ease, speed and cost savings. In view of the above, it is an object of this invention to provide a surgical training device that realistically simulates an anatomy and isolates a particular stage or step of a procedure that also enables repeatable practice. It has been demonstrated that the use of simulation trainers greatly enhances the skill levels of new laparoscopists and are a great tool to train future surgeons in a non-surgical setting. There is a need for such improved, realistic and effective surgical training models.

### Summary of the Invention

According to the present invention there is provided, a suture training model as recited in claim 1.

### Brief Description of the Drawings

FIG. 1 illustrates a top perspective view of a surgical training device which may incorporate a surgical training model according to the present invention.
FIG. 2A is a top perspective view of a suture training model with a single suture tab in each hole according to the present invention.
FIG. 2B is a top perspective view of a suture training model with two eyelets in each hole according to the present invention.
FIG. 3 illustrates a plurality of holes with different shapes in a section of a base of a suture training model according to the present invention.
FIG. 4 illustrates a suture training model according to the present invention having two planes hinged together.
FIG. 5 illustrates a suture training model according to the present invention having a base with two planes hinged together, each plane having a layer of compressible material and a plurality of suture tabs connected to the base.
FIG. 6A is a top perspective view of a suture tab of a suture training model according to the present invention.
FIG. 6B is a top perspective view of a suture tab of a suture training model according to the present invention.
FIG. 6C is a top perspective view of a suture tab of a suture training model according to the present invention.
FIG. 6D is a top perspective view of a suture tab of a suture training model according to the present invention.
FIG. 7A is a top perspective view of a suture tab of a suture training model according to the present invention.
FIG. 7B is a top perspective view of a suture tab of a suture training model according to the present invention.
FIG. 8A is a top perspective view of a base with three planes hinged together of a suture training model according to the present invention.
FIG. 8B is a top perspective view of a base with three planes hinged together of a suture training model according to the present invention.
FIG. 9 is a top perspective view of a base with three planes hinged together of a suture training model according to the present invention.
FIG. 10A is a top perspective view of a base of a suture training model according to the present invention.
FIG. 10B is a top perspective view of a base in a first orientation of a suture training model according to the present invention.
FIG. 10C is a top perspective view of the base of FIG. 110B in a second orientation.
FIG. 11A is a top perspective exploded view of a base of a suture training model according to the present invention.
FIG. 11B is a top perspective view of a base of a suture training model according to the present invention.
FIG. 12A is a top perspective exploded view of base of a a suture training model according to the present invention.
FIG. 12B is a top perspective view of a base of a suture training model according to the present invention.
FIG. 13A is a top perspective view of a suture training model according to the present invention.
FIG. 13B is a side elevational view of the suture training model of FIG. 13A.
FIG. 13C is a top view of the suture training model of FIG. 13A with a suture passed therethrough.
FIG. 14A is a top perspective view of a base of a suture training model according to the present invention.
FIG. 14B is a top view of the base of FIG. 14A.
FIG. 15A is a top perspective view of a base of a suture training model according to the present invention.
FIG. 15B is a top view of the base of FIG. 15A.
FIG. 16 is a top view of a base of a suture training model according to the present invention.
FIG. 17A is a top view of a base of a suture training model according to the present invention.
FIG. 17B is a side view of the base of FIG. 17A.
FIG. 18A is a top perspective view of the base of FIGs. 17A and 17B connected to a further base in a first orientation .
FIG. 18B is a top perspective view of the base of FIGs. 17A and 17B connected to the further base in a second orientation .
FIG. 18C is a top perspective view of the base of FIG. 17A and 17B connected to the further base in a third orientation.
FIG. 19 is a top perspective view of a base of a suture training model according to the present invention.
FIG. 20A is a top perspective view of a tab of a suture training model according to the present invention.
FIG. 20B is a side elevational view of the tab of FIG. 20A.
FIG. 20C is a front elevational view of the tab of FIG. 20A.
FIG. 20D is a top view of the tab of FIG. 20A according to the present invention.
FIG. 21A is a front elevational view of a tab in a first configuration of a suture training model according to the present invention.
FIG. 21B is a front elevational view of the tab of FIG. 21A in a second configuration.
FIG. 22 is a front elevational view of a tab of a suture training model according to the present invention.
FIG. 23 is a front elevational view of a tab of a suture training model according to the present invention.
FIG. 24 is a front elevational view of a tab of a suture training model according to the present invention.
FIG. 25 is a top perspective view of two side-by-side half tabs of a suture training model according to the present invention.
FIG. 26 is a top perspective view of two side-by-side half tabs of a suture training model according to the present invention.
FIG. 27 is a top perspective view of two side-by-side half tabs of a suture training model according to the present invention.
FIG. 28A is a top perspective view of two side-by-side half tabs of a suture training model according to the present invention.
FIG. 28B is a top view of two side-by-side half tabs of FIG. 28A.
FIG. 28C is a front elevational view of two side-by-side half tabs of FIG. 28A.
FIG. 29A is a top perspective view of a two side-by-side half tabs of a suture training model according to the present invention.
FIG. 29B is a front elevational view of two side-by-side half tabs of FIG. 29A.
FIG. 29C is a side elevational view of two side-by-side half tabs of FIG. 29A.
FIG. 30A is a top perspective view of two side-by-side half tabs of a suture training model according to the present invention.
FIG. 30B is a front elevational view of two side-by-side half tabs of FIG. 30A.
FIG. 30C is a top view of two side-by-side half tabs of FIG. 30A.

### Detailed Description of the Invention

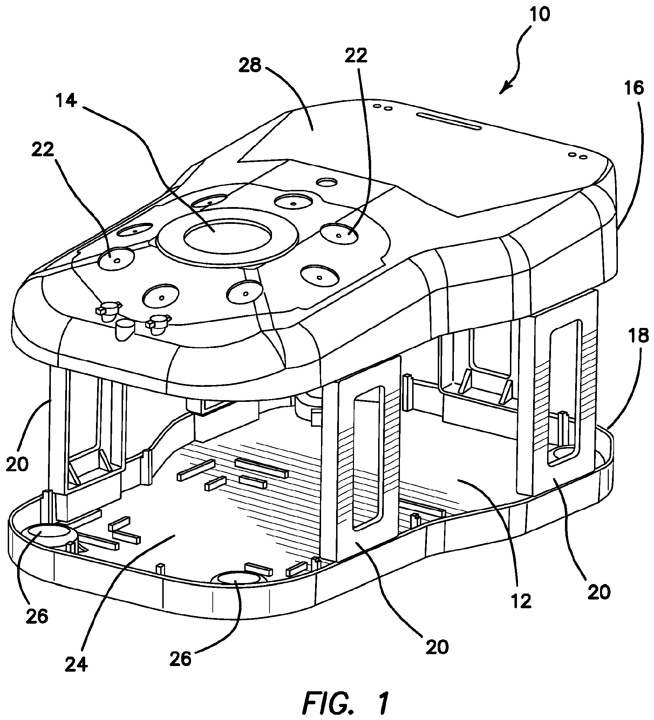

A surgical training device 10 that is configured to mimic the torso of a patient such as the abdominal region is shown in FIG. 1. The surgical training device 10 provides a body cavity 12 substantially obscured from the user for receiving simulated or live tissue or model organs or training models of the like described in this invention. The body cavity 12 is accessed via a tissue simulation region 14 that is penetrated by the user employing devices to practice surgical techniques on the tissue or practice model found located in the body cavity 12. Although the body cavity 12 is shown to be accessible through a tissue simulation region, a hand-assisted access device or single-site port device may be alternatively employed to access the body cavity 12. An exemplary surgical training device is described in U.S. Patent Application Serial No. 13/248,449 entitled "Portable Laparoscopic Trainer" filed on September 29, 2011. The surgical training device 10 is particularly well suited for practicing laparoscopic or other minimally invasive surgical procedures.

Still referencing FIG. 1, the surgical training device 10 includes a top cover 16 connected to and spaced apart from a base 18 by at least one leg 20. FIG. 1 shows a plurality of legs 20. The surgical training device 10 is configured to mimic the torso of a patient such as the abdominal region. The top cover 16 is representative of the anterior surface of the patient and the space 12 between the top cover 16 and the base 18 is representative of an interior of the patient or body cavity where organs reside. The surgical trainer 10 is a useful tool for teaching, practicing and demonstrating various surgical procedures and their related instruments in simulation of a patient undergoing a surgical procedure. Surgical instruments are inserted into the cavity 12 through the tissue simulation region 14 as well as through pre-established apertures 22 in the top cover 16. Various tools and techniques may be used to penetrate the top cover 16 to perform mock procedures on simulated organs or practice models placed between the top cover 16 and the base 18. The base 18 includes a model-receiving area 24 or tray for staging or holding a simulated tissue model or live tissue. The model-receiving area 24 of the base 18 includes frame-like elements for holding the model (not shown) in place. To help retain a simulated tissue model or live organs on the base 18, a clip attached to a retractable wire is provided at locations 26. The retractable wire is extended and then clipped to hold the tissue model in position substantially beneath the tissue simulation region 14. Other means for retaining the tissue model include a patch of hook-and-loop type fastening material (VELCRO^{®}) affixed to the base 18 in the model receiving area 24 such that it is removably connectable to a complementary piece of hook-and-loop type fastening material (VELCRO^{®}) affixed to the model.

A video display monitor 28 that is hinged to the top cover 16 is shown in a closed orientation in FIG. 1. The video monitor 62 is connectable to a variety of visual systems for delivering an image to the monitor. For example, a laparoscope inserted through one of the pre-established apertures 22 or a webcam located in the cavity and used to observe the simulated procedure can be connected to the video monitor 28 and/or a mobile computing device to provide an image to the user. Also, audio recording or delivery means may also be provided and integrated with the trainer 10 to provide audio and visual capabilities. Means for connecting a portable memory storage device such as a flash drive, smart phone, digital audio or video player, or other digital mobile device is also provided, to record training procedures and/or play back pre-recorded videos on the monitor for demonstration purposes. Of course, connection means for providing an audio visual output to a screen larger than the monitor is provided. In another variation, the top cover 10 does not include a video display but includes means for connecting with a laptop computer, a mobile digital device or tablet such as an IPAD^{®} and connecting it by wire or wirelessly to the trainer.

When assembled, the top cover 16 is positioned directly above the base 18 with the legs 20 located substantially around the periphery and interconnected between the top cover 16 and base 18. The top cover 16 and base 18 are substantially the same shape and size and have substantially the same peripheral outline. The internal cavity is partially or entirely obscured from view. In the variation shown in FIG. 1, the legs include openings to allow ambient light to illuminate the internal cavity as much as possible and also to advantageously provide as much weight reduction as possible for convenient portability. The top cover 16 is removable from the legs 20 which in turn are removable or collapsible via hinges or the like with respect to the base 18. Therefore, the unassembled trainer 10 has a reduced height that makes for easier portability. In essence, the surgical trainer 10 provides a simulated body cavity 12 that is obscured from the user. The body cavity 12 is configured to receive at least one surgical model accessible via at least one tissue simulation region 14 and/or apertures 22 in the top cover 16 through which the user may access the models to practice laparoscopic or endoscopic minimally invasive surgical techniques.

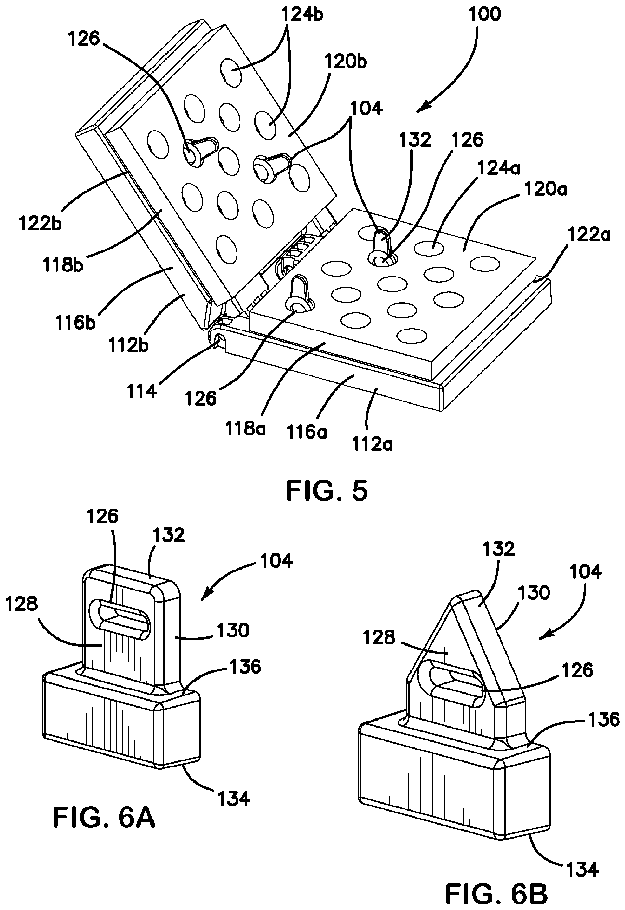

A model 30 for the practice of passing sutures in laparoscopic procedures according to the present invention is shown in FIGs. 5A-5B. The model 100 can be placed inside the surgical training device 10 described above or other similar surgical trainer to simulate suturing within a body cavity.

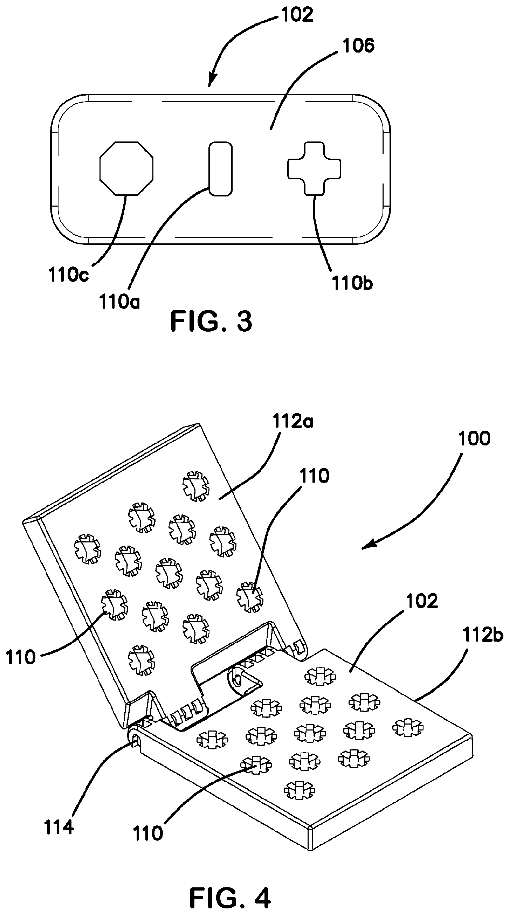

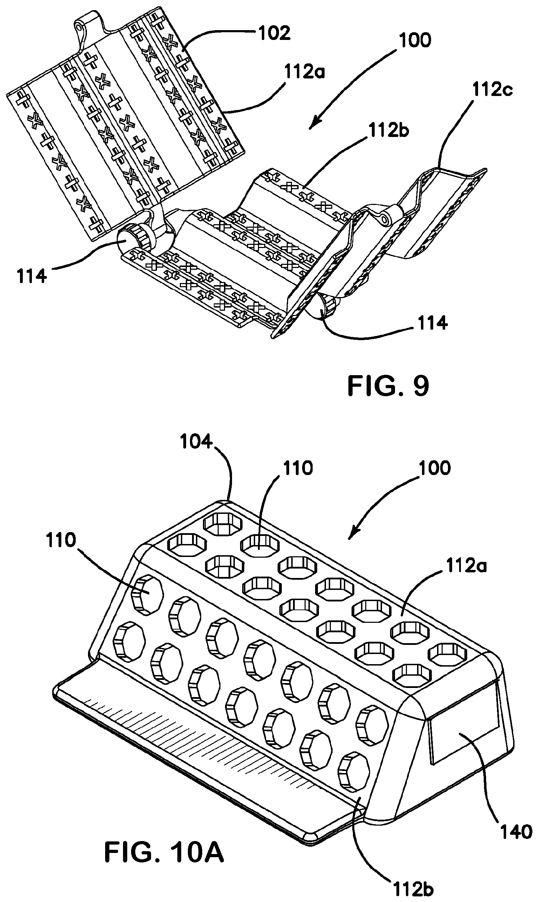

The model 100 includes a base 102 and a plurality of suture tabs 104 connected to the base 102. The base 102 includes a top surface 106 and a bottom surface 108 interconnected by a sidewall 109. Typically, the top surface 106 is parallel to the bottom surface 108 to define plate or planar structure having a thickness. A plurality of openings 110 are formed in the base 102 and extend between the top surface 106 and the bottom surface 108. The openings 110 are configured to receive a plurality of suture tabs 104. The base 106 is made of plastic, polymer or of any suitable material. The base 106 is generally rigid or semi-rigid and made be made of a single layer of material or contain one or more layers of material having different properties and characteristics. For example, a top base layer may be provided to impart a realistic tissue-like appearance to the model in color and/or texture and/or to increase the difficulty in approaching the target suture tabs 104 as will be discussed in greater detail below. The base 102 includes at least one opening-containing portion 112 that includes openings 110. For example, in FIG. 4 the suture training model 100 includes two portions 112A, 112B hinged together. Each portion 112 may comprise a single plane or include multiple interconnected planes or surfaces. In FIG. 4, each opening-containing portion 112A, 112B defines a separate plane. The separate planes may be formed/molded integrally with each other such that the planes and their relative angles are fixed such as shown in FIGs. 9-12. In another variation, the one or more opening-containing portions 112, whether they are planar or not, are movable with respect to each other such that the angle between one or more opening-containing portions 112 can be adjusted as desired. The angle may be adjusted and re-adjusted as needed to create a different suture passing landscape that may or may not be representative of anatomical situations. Also, the angle may be adjusted to create a custom and variable level of difficulty for practicing suture passing on the model and, thereby, create a progressive learning experience. The angle between two or more distinct and separate opening-containing portions 112 may be fixed with a thumb screw, friction-fit or other arrangement configured to lock the relative position such as by tightening a hinge 114 connecting the two or more planes 112. In another variation, the separate opening containing portion 112 or surfaces of opening-containing portions 112, whether they are planar or not, are moved relative to each other by bending the base 102. In such a variation, the base 102 is made of a suitable pliable material, such as aluminum, and having a thickness that would permit the base to bend.

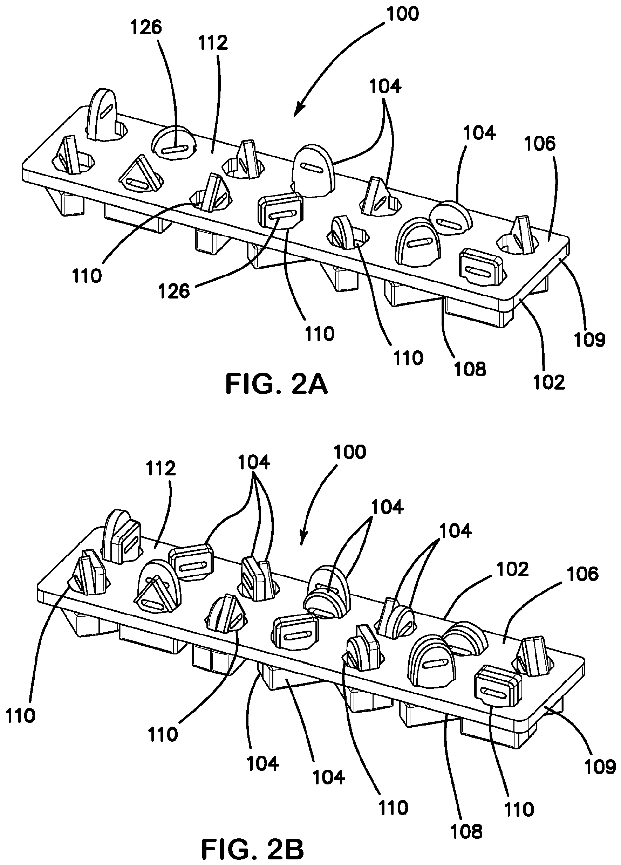

With reference back to FIGs. 2A-2B and with additional reference to FIGs. 3-4, the openings 110 in the base 102 will now be described in greater detail. Each opening 110 defines a longitudinal axis that is substantially normal to the opening 110 at the top surface. Each opening 110 is sized and configured to removably receive at least one suture tab 104. Some of the possible shapes of the openings 110 in the base 102 when viewed along the longitudinal axis are shown in FIG. 3. In FIG. 3, one opening 110A has shape of a slot. The slot is rectangular and elongate. The opening 110A has a shape that is complementary to the rectangular shape of at least a portion the suture tab 104 that is to be received in the opening 110A. The slot is sized to be slightly larger or slightly smaller to create a friction-fit engagement with the suture tab for retaining the tab inside the base opening. Still referencing FIG. 3, another exemplary opening 110B has a cross-like or X-like shape. The cross-shaped opening 110B is formed by two rectangular openings, each similar to the rectangular slot-like opening 110A, that intersect at 90 degrees. The cross-like shape of opening 110B allows at least a portion of a suture tab 104 with a complementary rectangular shape to be inserted into one of the two legs of the opening 110B. The tab 104 is inserted in a first direction or orientation and removable to be also inserted in the other leg of the opening 110B in a second direction that is lateral, perpendicular or angled with respect to the first direction. The ability to receive a suture tab 104 in more than one orientation within a single opening 110 allows the suture pathway to be defined as desired making it easier or more difficult to pass sutures through the suture tabs 104 because of their orientation within multi-directional openings 110 relative to the orientation of adjacent suture tabs 110. Still referencing FIG. 3, in another variation, an opening 110C has an octagonal shape permitting alignment of suture tabs 104 inside the opening along four different directions. The opposite facets of a multi-faceted opening, such as the octagon, provide alignment and a friction-fit engagement against the suture tab 104 inside the opening 110C. At least part of the suture tab 104 is sized to conform closely to the facets and abut the edges of the opening 110. Similar to the octagonal-shaped opening 110C, FIG. 4 illustrates a star-like shaped opening 110 defined by four intersecting rectangular openings that permit a suture tab 104 to be oriented in four different angles and directions within one of the four intersecting rectangular openings. A circular opening 110 would also work to retain the suture tab 104 within the opening 110 but would not act to orient the tab in any predefined direction.

With reference to FIG. 4, there is shown a suture training model 100 according to the present invention. The suture training model 100 includes two opening-containing portions 112A, 112B movably connected at a hinge 114. A first opening-containing portion 112A can angulate with respect to a second opening-containing portion 112B. Each of the first and second opening containing portions 112A, 112B is substantially planar and includes a plurality of star-like shaped openings 110. All of the openings 110 are shown to have the same shape. In another variation, the openings 110 may have different shapes. A base 102 with openings 110 having different shapes help communicate a pre-defined pathway to the user who would insert suture tabs 104 into the openings 110 according to their predefined angulation relative to adjacent openings.

Turning now to FIG. 5, there is shown another suture training model 100 according to the present invention. The suture training model 100 includes a base 102 having more than one layer. In particular, the base 102 includes a first layer 116 and a second layer 118. The second layer 118 is located above the first layer 116. In the variation of the suture training model 100 shown in FIG. 5, the base 102 includes a first opening-containing portion 112A connected at an angle to a second opening-containing portion 112B via a hinge 114 making the first opening-containing portion 112A adjustable and movable with respect to the second opening-containing portion 112B. In one variation, each portion 112A, 112B has a separate second layer 118A, 118B, respectively. In another variation, a single second layer 118 spans both portions 112A, 112B bridging any gap therebetween. The second layer 118 includes a top surface 120 and a bottom surface 122 defining a thickness. The bottom surface 122 of the second base layer 118 abuts and overlays the top surface of the first base layer 116 and may be attached with adhesive. The second base layer 118 further includes a plurality of apertures 124 extending between the top surface 120 and the bottom surface 122. The apertures 124 of the second base layer 118 are aligned with the openings 110 in the first base layer 116 to permit suture tabs 104 to extend through both layers 116, 118. In one variation, at least a portion of the suture tab 104 extends above the top surface 120. In another variation, the suture tab 104 does not extend above the top surface 120. The variation of the suture training model 100 of FIG. 5 includes two opening-containing portions 112A, 112B that are connected to each other with a hinge 114 and each is shown to include a first base layer 116A, 116B, second base layer 118A, 118B, and apertures 124A, 124B, respectively. The second layer 118 is made of soft compressible material, such as foam, imparting the base 102 with a realistic tissue surface while serving to hide and embed the suture tabs 104. The addition of a soft foam second layer 118 adds to the experience, providing another material which must be manipulated by the user in order to complete the exercise. For example, the user may push down or compress the foam second layer 118 to access or view the aperture 126 of the suture tab 104.

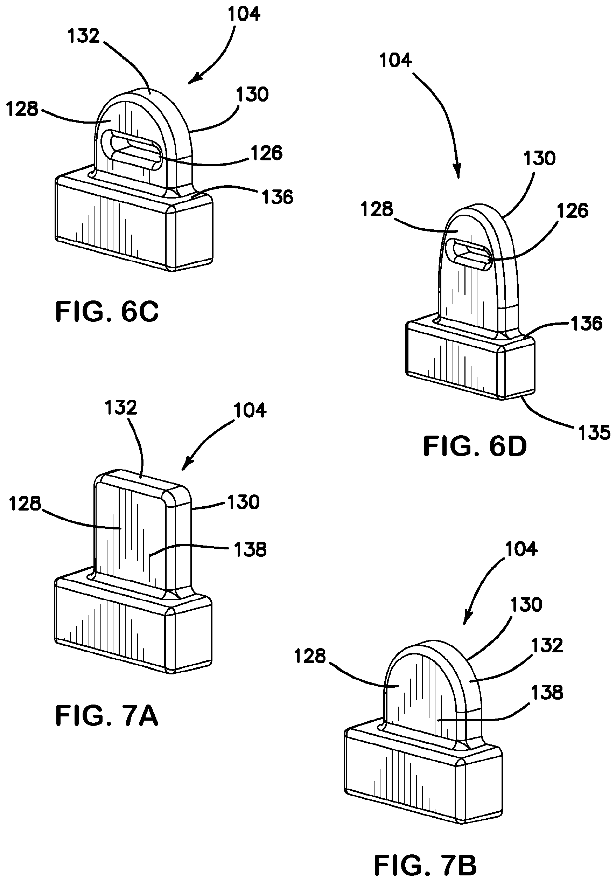

Turning now to FIGs. 6A-6D, there are shown several variations of a suture tab 104 for use in the present invention. The suture tab 104 includes a first side 128 and a second side 130 defining a thickness therebetween. The first and second sides 128, 130 are substantially vertical and are interconnected by a top 132 and a bottom 134. The suture tab 104 includes at least one pre-formed aperture 126 that extends between the first side 128 and the second side 130. The aperture 126 can be any shape and size. In one variation, the aperture 126 has an elongate slot-like shape. The elongate-shaped aperture 126 may include curved sides and be oval-like such that the aperture 126 has fewer stress concentrations when pulled. The suture tab 104 is made of elastic material such as silicone, elastomer, rubber or polymer. The bottom 134 of the suture tab 104 has a larger footprint and is larger than the top 132 portion. A ledge 136 is defined around at least a portion of the suture tab 104 at the intersection of the larger bottom 134 with the smaller top 132. The top 132 of the suture tab 104 may have any type of shape. For example, in FIG. 6A, the top 132 of the suture tab 104 has a flat shape to form a top that is square-like or rectangular-like around the aperture 126. In FIG. 6B, the top 132 has a taper or pointed end to form a triangular-like shape around the aperture 126. In FIG. 6C, the top 132 is rounded or curved. In FIG. 6D, the top 132 is also rounded and curved and longer and narrower than the top 132 of the suture tab 104 shown in FIG. 6C. The aperture 126 in FIG. 6D is also shorter than the aperture 126 of FIG. 6C. The suture tab 104 is sized and configured to be inserted into an opening 110 in the base 102. Prior to insertion, the suture tab 104 is aligned with an opening 110 in the base 102. In particular, if the opening 110 in the base 102 is configured for receiving a suture tab 104 in one direction such as the opening 110A in FIG. 3, the suture tab 104 is aligned with the opening 110. If the opening 110 is configured to permit multiple orientations of the suture tab 104 such as openings 110B, 110C in FIG. 3 and openings 110 in FIG. 4, the orientation of the suture tab 104 is selected and the suture tab 104 is inserted such that the suture tab 104 outer surface is aligned with the facets of the opening 110 to be retained therein. To insert the suture tab 104 into the base 102, the base 102 is approached from the bottom surface 108 and the smaller and narrower top 132 of the suture tab 104 leads the insertion into the opening 110 as aligned. When sufficiently inserted, the ledge 136 of the suture tab 104 will abut the bottom surface 108 of the base 102 to retain the suture tab 104 inside the opening 110. The suture tabs 104 are retained in the openings 110 with a slight interference fit between the soft silicone tabs 104 and the rigid plastic base 102.

Furthermore, the plurality of suture tabs 104 may include one or more groups of tabs 104 that have the same color, thus being color-coded so that a predetermined path along which a suture must be passed is defined by the color of the tabs 104. For example, a set of green-colored tabs 104 may define either a predetermined path that is particular to a surgical procedure or may define a relatively easy skill level defined by the tabs 104. The suture passing exercise would require users to pass the suture through the green tabs, for example, while avoiding the red tabs. In another variation, the red tabs can be replaced with tabs that do not contain apertures 126.

When inserted, the suture tabs 104 will rest in connection with the base 102 as shown in FIG. 2A. In FIG. 2A, the apertures 126 of the suture tabs 104 are resident substantially above the top surface 106 of the base 102. In another variation, the apertures 126 are resident substantially beneath the top surface 106 of the base 102 to hide or at least partially conceal the aperture 126 or part of the tab 104. In another variation, the openings 110 in the base 102 are sized and configured to receive more than one suture tab 104 side-by-side as shown in FIG. 2B. In FIG. 2B, two side-by-side suture tabs 104 are shown inserted in each opening 110. The two suture tabs 104 may have the same-shaped tops 132 or different shaped tops 132. Also, the adjacent suture tabs may be color-coded with different colors or have the same color. The suture tabs 104 extend above the top surface 106 of the base 102 such that the top 132 of the suture tab 104 may be grasped by the surgeon and pulled in a vertical direction. Pulling the elastic suture tab 104 will result in the suture tab 104 stretching in the vertical direction. Such stretching elongates the suture tab aperture 126 in the vertical direction making the aperture 126 larger. All the while, the pulling of the suture tab 104 is biased by the ledge 136 contacting the base 102 preventing the suture tab 104 from being pulled completely out of the base 102 when pulled upwardly. The suture tabs are removable with respect to the base 102 when moved downwardly. With more than one suture tab located inside an opening in a side-by-side placement of suture tabs, the user takes care to pull on the appropriate tab or to pull on both tabs as needed to complete the exercise. The suture tab 104 has a first resting configuration in which the suture tab aperture 126 has a first size and a second extracted, elongated or pulled configuration in which the suture tab aperture 126 has a second size that is larger than the first size. The suture tab 104 is movable between the first configuration and the second configuration by pulling the proximal end or top of the suture tab 104 upwardly relative to the base top surface 106. The second configuration makes suture passing easier as the aperture 126 has an enlarged vertical dimension when pulled. The elongated, slot-like aperture 126 of FIGs. 6A-6D has a longitudinal axis that is substantially perpendicular to the vertical pulling direction such that the vertical dimension of the aperture 126 is enlarged when pulled. In one variation the aperture 126 is merely a slit or cut in the tab that is barely visible, yet opens when pulled and stretched against the base.

Another variation of the suture tab 104 is shown in FIG. 5. The suture tab 104 of FIG. 5 has a circular aperture 126 and an extended top 132 that provides an area or extension that can be easily grasped by the user. The extension may have a different shape that is more difficult to grasp and to hold. In this variation, if the suture tab 104 is pulled upwardly the circular aperture will form an elongated and narrower configuration making suture passing through the aperture 126 more difficult; thereby, teaching the surgeon respect for tissue skills to more delicately handle the simulated tissue represented by the suture tab 104 during suturing. Hence, the suture tab 104 has a first resting configuration in which the suture tab aperture 126 has a first size having a first dimension and a second extracted or pulled configuration in which the suture tab aperture 126 has a second size wherein the first dimension is smaller than when in the first configuration, the first dimension being the same measured dimension in the first and second configurations. The suture tab 104 is movable between the first configuration and the second configuration by pulling the proximal end or top of the suture tab 104 upwardly relative to the base top surface 106. The second configuration makes suture passing more difficult by a narrowing of the aperture 126. The aperture 126 has a lateral dimension that has a component perpendicular to the vertical or pulling direction and it is the lateral dimension that decreases in size in the second configuration relative to the first configuration.

Turning now to FIGs. 7A-7B, there is shown variations of suture tabs 104 that do not have apertures 126. These suture tabs 104 are similar to the suture tabs of FIGs. 6A-6D but without apertures 126. The suture tab 104 in FIG. 7A has a flat top 132 forming a rectangular-like or square-like shape. The top 132 of the suture tab 104 defines a penetrable portion 138 between the first side 128 and the second side 130. In this variation, there is no pre-defined aperture 126 for practicing the passing of needle and suture. Instead, the practitioner pierces an aperture with a needle and passes a suture through the top 132 of the suture tab 104. The silicone material of the suture tab 104 creates a tissue-like feel when penetrating with a needle. Also, the top 132 of the tab 104 can be pulled upwardly and stretched and the suture tab 104 will respond like real tissue and stretch in a similar fashion to permit the passage of needle and suture. These aperture-less suture tabs 104 may be placed side-by-side in the same opening 110 with more than one other aperture-less suture tab 104 or be placed with more than one suture tab 104 having an aperture 126. In one variation, the suture tabs 104 do not have a ledge 136 on one side of the tab 104 such that the side is flush from top 132 to the bottom 134. This flush side of the suture tab 104 is placed against another flush side of another suture tab 104 in a side-by-side placement of two suture tabs 104 in one opening 110 leaving no space between the two tabs 104 making it more difficult to grasp and pull a single suture tab 104. In another variation, both opposite sides of a suture tab may not have a ledge such that a ledge is only located on two of the opposite four sides of the tab or along at least a portion of the tab sufficient to abut against the base and retain the tab.

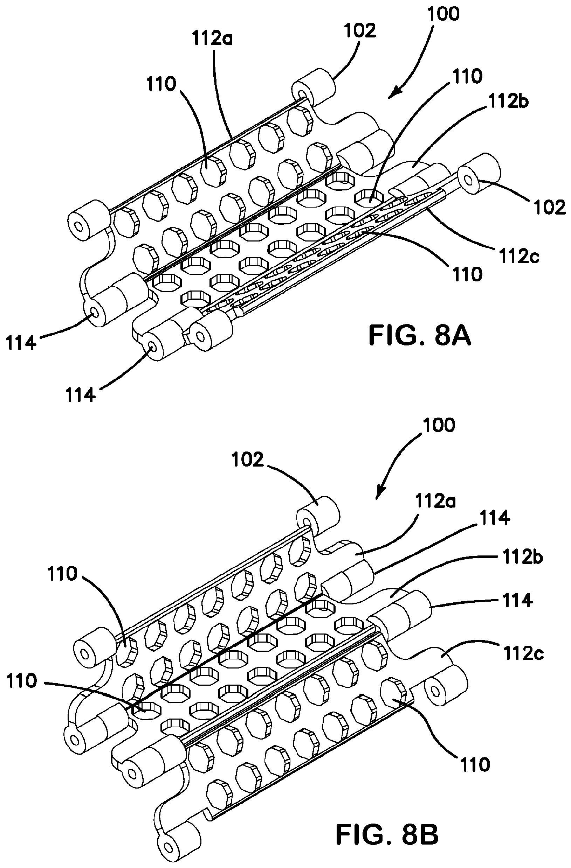

Turning now to FIGs. 8A and 8B, there is shown another variation of the model 100 with a base 102 having more than one interconnected surface 112. In particular, FIGs. 8A-8B illustrate three opening-containing portions 112A, 112B and 112C interconnected by hinges 114. Each opening-containing portion 112 includes openings 110 and defines a movable surface or plane which can be arranged at an angle as desired relative to another opening-containing portion 112 to increase the difficulty of the exercise or to simulate an anatomical landscape.

Turning now to FIG. 9, there is shown another variation of the model 100 with a base 102 having more than one interconnected surface 112. In particular, FIG. 9 illustrates three opening-containing portions 112A, 112B and 112C interconnected by hinges 114. Each opening-containing portion 112 includes openings 110 and defines a movable surface or plane which can be arranged and angulated as desired relative to another opening containing portion 112 to increase the difficulty of the exercise or to simulate an anatomical landscape. The variation of FIG. 9 includes complementary surfaces within each portion 112 to create a collapsible version such that one opening-containing portion 112 can fold over and into juxtaposition with another opening-containing portion 112.

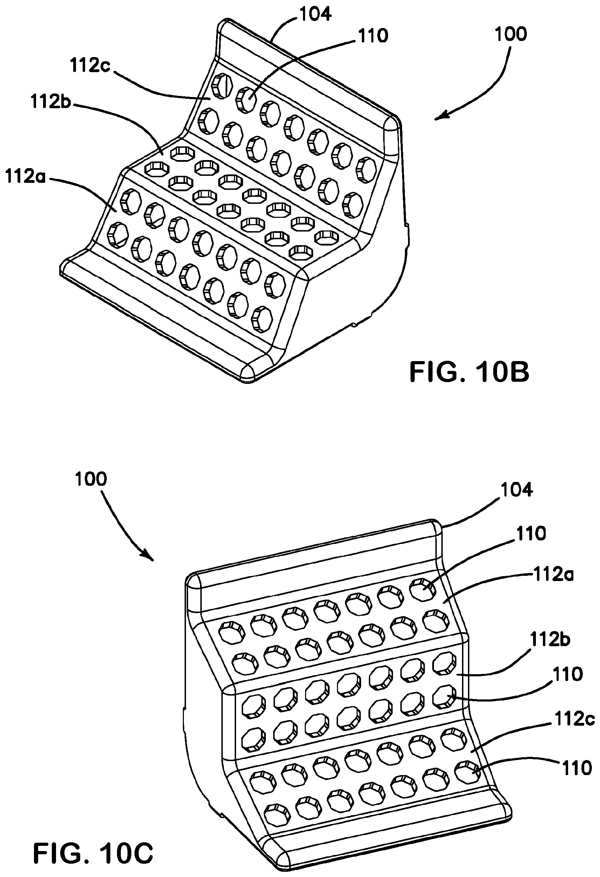

Turning now to FIGs. 10A-10C, additional variations of the suture-passing model 100 are shown that do not have movable opening-containing portions 112. The model 100 of FIG. 10A includes two opening-containing portions 112A, 112B integrally interconnected at a predetermined angle defined between the two portions 112A, 112B as part of the base 102 of the model 100. The two opening-containing portions 112A, 112B include a plurality of openings 110 in each portion. In one variation, the angle included between the two portions 112A, 112B is greater than 90 degrees. The base 102 can be connected to the base 18 of a surgical training device 10 via a hook-and-loop type fastener 140 or other means of attachment, parts of which are attached to model 100 in one or more locations of the model 100 such that the model 100 can be removable fixed to the base 18 or other surface of a training device 10 at different orientations/angulations with respect thereto. FIGs. 10B-10C, illustrate a model 100 having three opening-containing portions 112A, 112B, 112C integrally interconnected at predetermined angles defined between the portions 112A, 112B, 112C as part of the base 104 of the model 100. The model 100 can be connected to a table top or base 18 of a surgical trainer 10 via an optional fastener 140 such as a hook-and-loop type fastener 140 in a first orientation such as shown in FIG. 10B and oriented upside-down, for example, in a second orientation such as shown in FIG. 10C to provide multiple options and angled variations for practicing suture passing with the same model 100. Also, the model 100 may be turned on one or more of its sides to provide further variation of the relative fixed angles for practice.

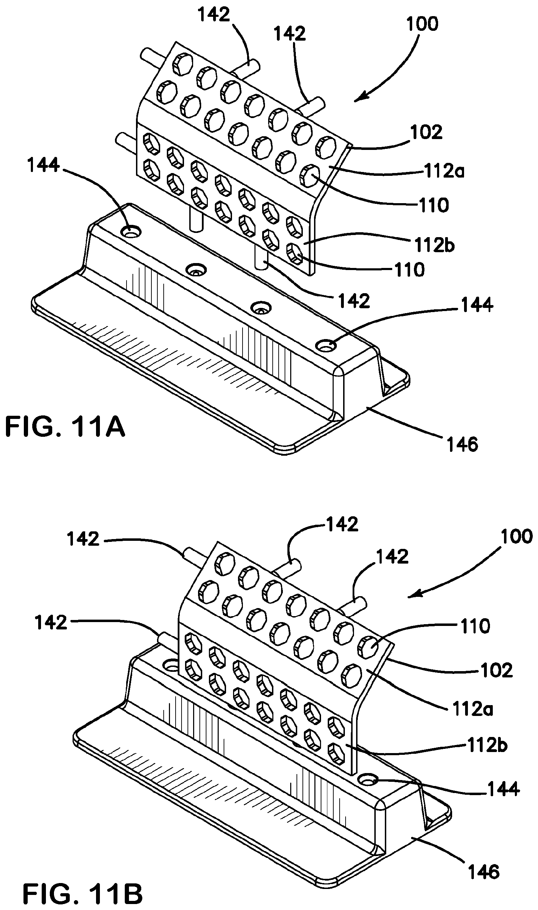

Turning now to FIGs. 11A-11B, there is shown another variation of the suture passing model 100 according to the present invention. The model 100 includes a base 102 containing a plurality of openings 110. The base 102 may further include one or more connected opening-containing portions 112 that are angled with respect to each other. In FIGs. 11A-11B, the base 102 includes two opening-containing portions 112A, 112B that are angled with respect to each other. The model 100 further includes pegs along the periphery of the base 102 that are sized and configured to be inserted into holes 144 formed in a stand 146. The stand 146 is configured to hold the base 102 in an upright and stable orientation with respect to a table top or other surface such as a base surface 18 in a surgical trainer 10. The base 102 is removable with respect to the stand 146 so that the base 102 can be oriented in another direction by inserting a different set of pegs 142 on another side of the base 102 into the holes 144 in the stand 146. FIG. 11A illustrates the base 102 disconnected from the stand 146 and FIG. 11B illustrates the base 102 connected to the stand 146. The holes 144 in the stand 146 are configured to receive the pegs 144 and to hold the base 102 steady in any of its orientations with respect to the base so that suture training exercises can be performed. The base 102 in FIGs. 11A-11B illustrates an integrally angled base 102 having two or more suture planes 112A, 112B. In another variation, the base 102 may include more than one suture planes 112A, 112B that are connected together via a hinge.

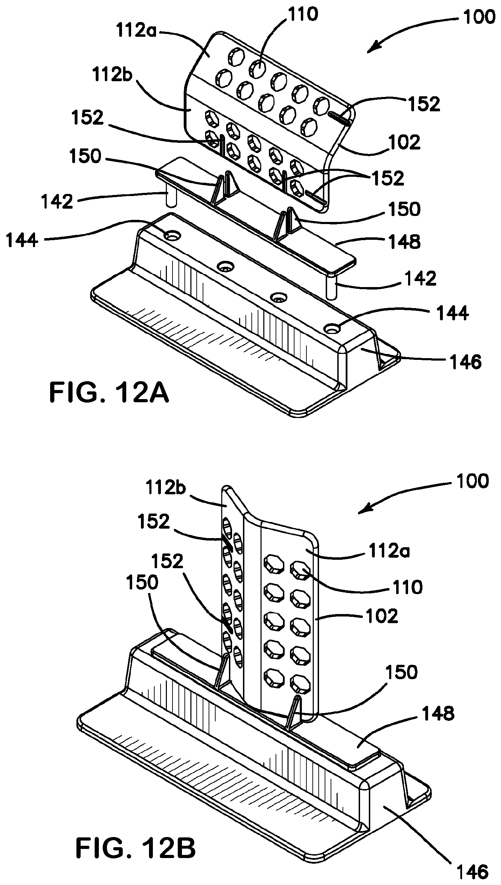

Turning now to FIGs. 12A-12B, illustrates another variation of the suture training model 100. The model 100 includes a base 102 having a plurality of openings 110 arranged on one or more opening-containing portions 112. The variation of FIGs. 12A-12B contains two opening-containing portions 112A, 112B that are integrally formed at an angled with respect to each other. They may also be formed such that the two or more opening-containing portions 112 are movable with respect to each other to adjust the angles between the opening-containing portions 112. The model 100 includes a stand 146 having a plurality of holes 144 configured to mate with pegs 142 of a holder 148. The holder 148 is configured to snap into the stand 146 and to hold the base 102. The holder 148 includes at least one upstanding mouth 150 defining a gap into which notches 152 formed in the base 102 can mate and be received to hold the base 102 in an upright orientation with respect to the stand 146 which is configured to support the base 102 on a flat table top surface or other surface such as a base 18 in a surgical trainer 10. The base 102 includes a plurality of notches 152 formed around the periphery such that the base 102 can be oriented in multiple directions. For example, in FIG. 12A, the notches 152 on one side of the base 102 are engaged with the mouth 150 of the holder 148 to orientate the base 102 in a horizontal position. In FIG. 12B, the notches 152 on another side of the base 102 are mated with the gaps of the mouth 150 of the holder 148 to orientate the base 102 in a vertical position. With multiple orientations, a single model 100 is capable of providing variations in training for the passage of sutures through planes at different angles and orientations.

The suture training model 100 provides a flexible training platform that allows users of all skill levels to practice suturing and suture passing techniques. The model 100 employs flexible suture tabs 104 and an adjustable base 102 that can be configured and reconfigured depending on the technical skill of the user and the desired type of practice. The model 100 consists of a base 102 that contains a plurality of openings through which the suture tabs 104 are placed and can be pulled. The base 102 can be a single object with no moving parts or an object with multiple adjustable surfaces or planes. The suture tabs 104 have a wider stopper base 134 which prevents the suture tabs 104 from being pulled through the openings 110. The openings 110 in the base 102 can be a number of different shapes including slots, x-shapes, hexagons, octagons etc. Similarly, the suture tabs 104 can be a variety of shapes and sizes. Furthermore, the suture tabs 104 can contain one or more hole or slot 126 through which the suture is passed. Other tabs have neither a slot nor a hole 126 but provide a penetrable region and can be used alone or in conjunction with the slotted tabs to provide a greater challenge and more realistic simulation. In one practice scenario, the user targets the slotted tab 104 and avoids the aperture-less tab 104 and in another practice scenario, the user passes a suture through the aperture-less tab and avoids the slotted tab 104. In yet another practice scenario, the user may pass a suture through both tabs whether one or more of them contain apertures 126 or not. This practice requires the user to pull both adjacent tabs and carefully pass the target and pass the suture. The shape of the opening 110 in the base 102 determines the orientation of the tabs 104 relative to the base 102. The shape of the opening 110 and, hence, the orientation of the suture tab is predetermined relative to other openings 110 in one configuration of the base 102 and as such can be customized for predefining a suture pathway encountered in real surgery. In another variation, a single opening 110 has multi-directional orientation possibilities for a suture tab 104 permitting the user to orientate the tabs as desired or according to a manual designating various possible pathways for practicing various difficulty levels, test or anatomical situations and procedures. Because the suture tabs 104 are made of elastomeric material, when the tab 104 is manipulated with laparoscopic graspers or dissectors, the user can advantageously stretch the aperture 126 to a more open position through which the suture need can be passed. Because the apertures 126 are not at rest in an open position and the tab 104 tends to spring back to an unbiased, unstretched position, the user is forced to use both hands in concert to complete the exercise. Using one hand to keep the tab stretched in an aperture-open configuration and the other hand to pass the needle through the aperture 126 while it is in an open configuration. The suture passing exercise provided by the model 100 is open to the interpretation of the user. By providing a number of openings 110 through which to place the tabs 104 as well as providing an adjustable base 102, the device 100 can be used to challenge users of a range of skill levels. Furthermore, the exercise can be reconfigured to simulate specific anatomy of interest to a practitioner. Also, the size and shape of the tabs and their respective slots increases the challenge of the exercise. With the suture training model 100, the user must manipulate the tab in order to sufficiently open the aperture 126 in order to pass the suture through said aperture 126. This added dimension increases the challenge and realism of the simulation. Having tabs 104 of various shapes and sizes as well as the configuration in which they are placed on the base 102 provides for varying degrees of difficulty for the exercise. Larger tabs 104 with pre-formed holes are the easiest. The user can graduate to tabs 104 that have slots which require the use of two hands in order to turn the slot into a hole and pass the suture through. The small slot may be a line cut through the tab 104. The smaller the aperture 126, the higher level of precision is required in order to successfully complete the exercise. The addition of tabs 104 with no apertures 126 further increases the level of proficiency needed in order to avoid surrounding tissue while accessing the target anatomy with a suture. Furthermore, side-by-side placement of tabs with or without apertures 126 also increases the difficulty level of practice. Tabs 104 with no aperture 126 are used for a higher level of fidelity where the user must practice driving the needle through the tissue itself rather than a preformed aperture 126.

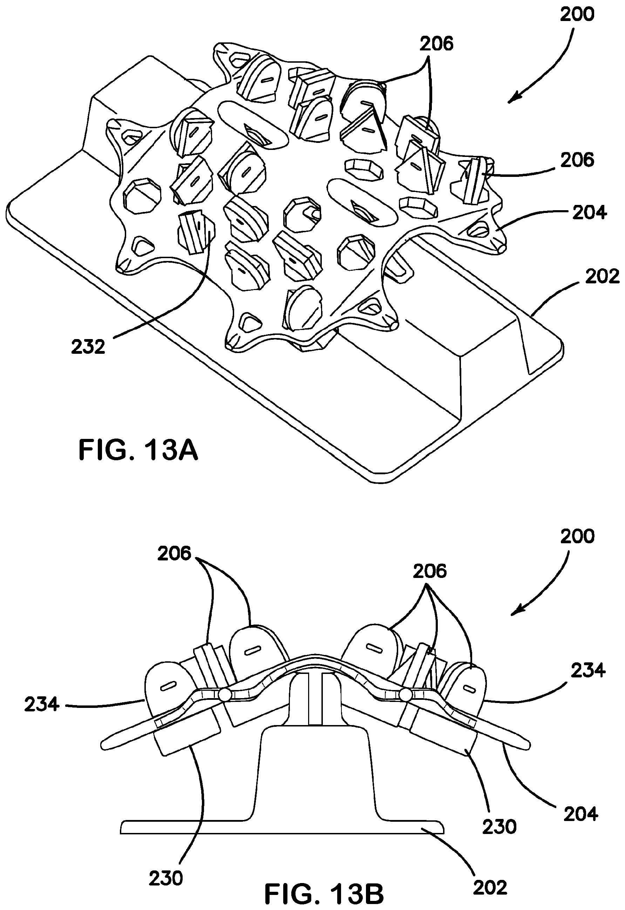

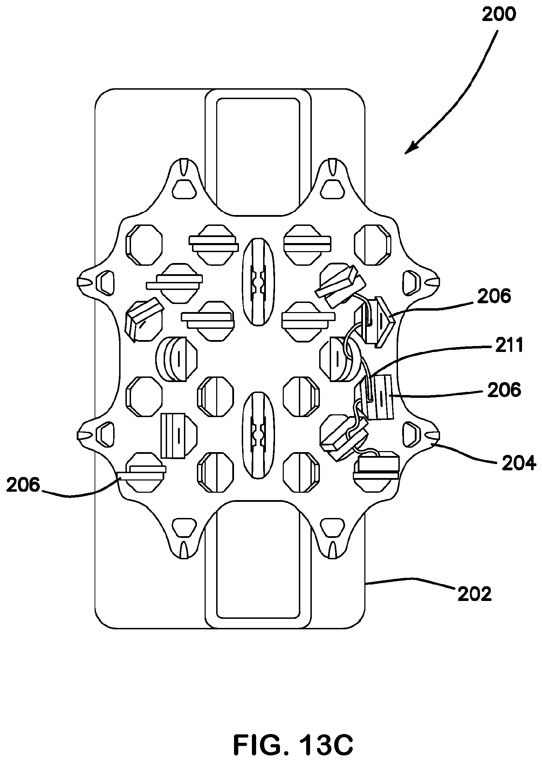

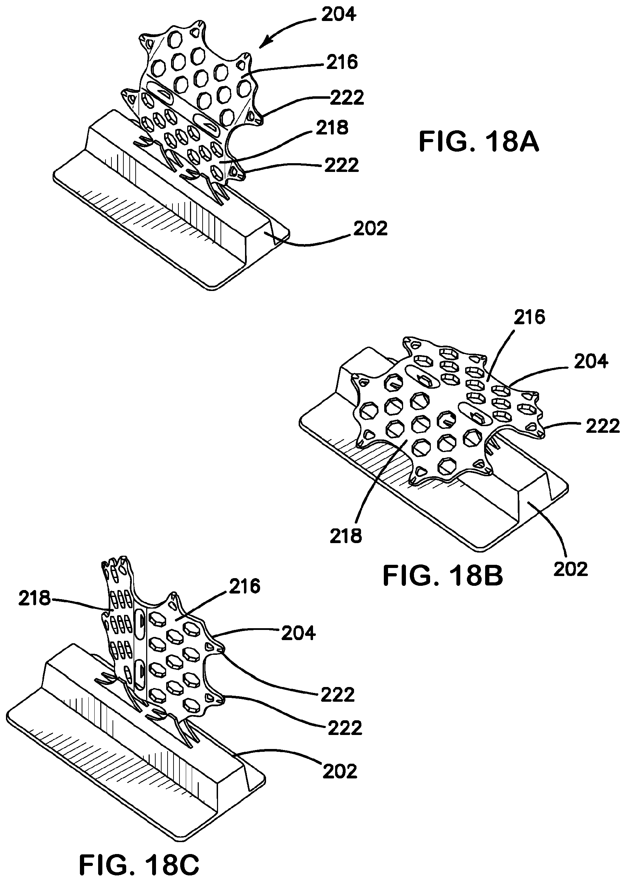

Turning now to FIGs. 13A-13C, there is shown another variation of a suture training model 200. The model 200 includes a stand 202, a base 204, and one or more tabs 206. The stand 202 supports the base 204. The base 204 attaches to the stand 202 and may support the base 204 in a variety of orientations as shown in FIGs. 18A-18C. The one or more tabs 206 connect to the base 204 in a variety of orientations. The one or more tabs 206 are configured such that a suture and needle may pass through the one or more tabs 206. A suture 211 is shown in FIG. 13C passing through several tabs 206. The suture training model 200 is configured to be easily placed into and removed from inside the cavity 12 of a surgical training device 10. Alternatively, the model 200 may be used outside a training device 10 to practice suture passing. The stand 202 is configured to support the base 204 and tabs 204 and withstand forces exerted by the user during the passing of needle and suture without toppling over or responding in a manner that is not realistic when manipulated. The model 200 is configured to be secure enough to withstand such forces applied during suturing, including tying knots, pulling and pushing. The base 204 is easily connected and disconnected from the stand 202 to change the orientation of the base 204 with respect to the stand 202 and/or for portability purposes. Tabs 206 are removably connected to the base 204 so that used tabs 206 may be replaced with new tabs 206 after use if needed. Tabs 206 are configured to receive sutures 211 passed with a needle and/or other instrument and withstand forces applied during suturing, typing knots, and inadvertent or intentional pushing, pulling or rotating in multiple directions. The base 204 has a plurality of tab receiving locations such as apertures 220 providing a multitude of options for suture pathways and orientations offering varying levels of difficulty for simulated operations.

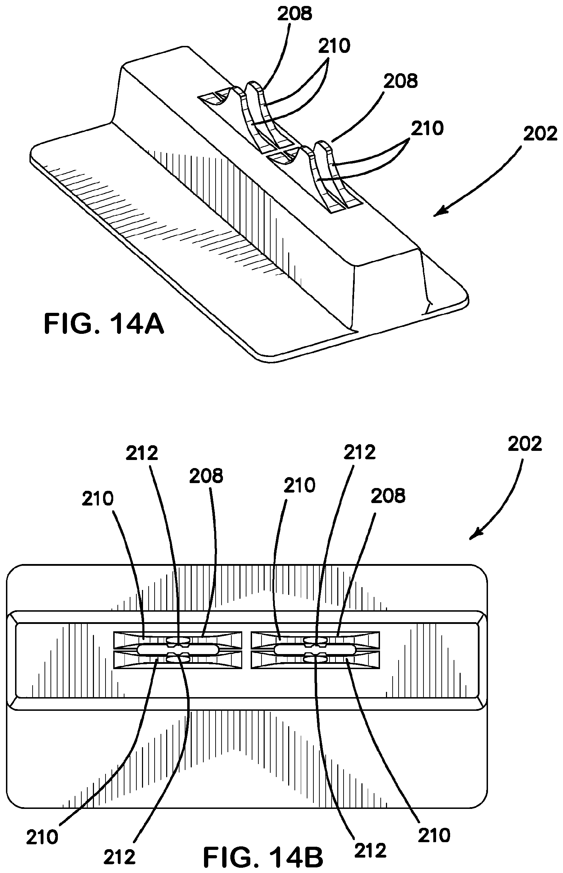

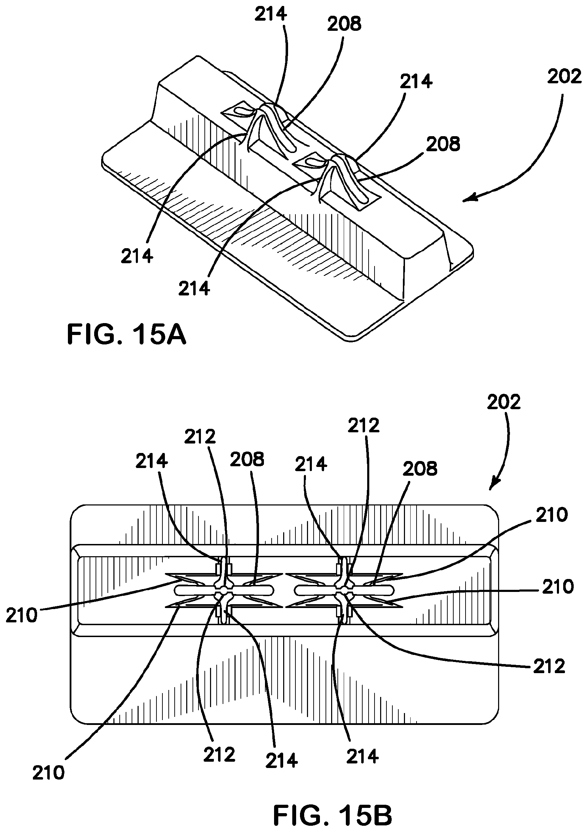

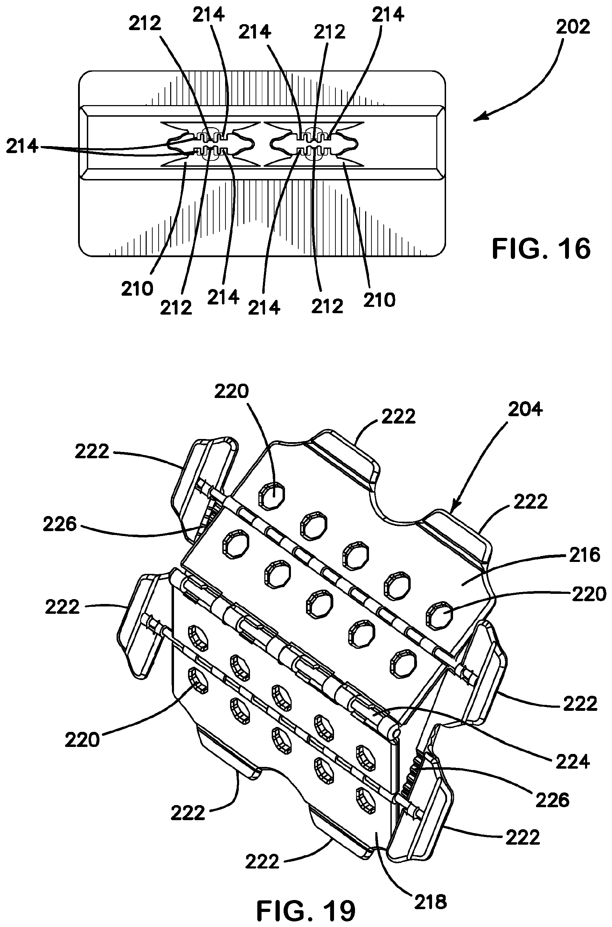

Turning now to FIGs. 14A-14B, there is shown a stand 202. The stand 202 includes a planar bottom surface for placement on a flat surface such as the base 18 of a surgical training device 10 or table top. The bottom surface is interconnected with a top surface that includes at least one upstanding clip 208. FIGs. 14A-14B illustrate a stand 202 with two clips 208 that are aligned and spaced apart from each other. Each clip 208 includes two finger-like projections 210 spaced apart from and facing each other to create a gap for receiving a portion of the base 204 within the gap. The facing surfaces of the projections 210 include features such as a channel 212 for guiding and receiving the base 204 and features for connecting with the base 204 such as in a snap-fit, friction-fit or other engagement. The features are not limited to the channel 212, clips, or any other structure that interacts with base 204 and facilitates connection therewith. In one variation, the base 204 includes complementary clip adapters that interact with the clips 208 to secure the base 204 to the base 200. One or more of the finger-like projections 210 may be provided per clip 208. In one variation, the one or more finger-like projections 210 includes one or more reinforcing rib 214 located on the outside surface of the projection 210 as shown in FIGs. 15A-15B or on the inside surface of the projection 210 as shown in FIG. 16. The reinforcing rib 214 of FIGs. 15A-15B is substantially perpendicular to the outer surface of the projection. The reinforcing rib 214 may also be oriented vertically on the outside surface or inside surface as shown in FIG. 16. The reinforcing rib 214 is configured to increase the rigidity of the projection 210 and prevent over-flexion of the base 204 when manipulated. The reinforcing rib 214 is connected or attached to or integrally formed with the projection 210.

The stand 202 is made of rigid material. In one variation, the stand 202 is configured to securely attach to the base 18 of a surgical training device 10 with hook-and-loop type fastening material. In such a variation, the bottom surface of the stand 202 includes one side of the hook-and-loop type fastening material facing outwardly. A complementary piece of hook-and-loop type fastening material is connected to a surface of the base 18 of the surgical training device 10. Other means are within the scope of the present invention for removably attaching the model 200 to a surface of the trainer 10 in order to secure the model 200 during use.

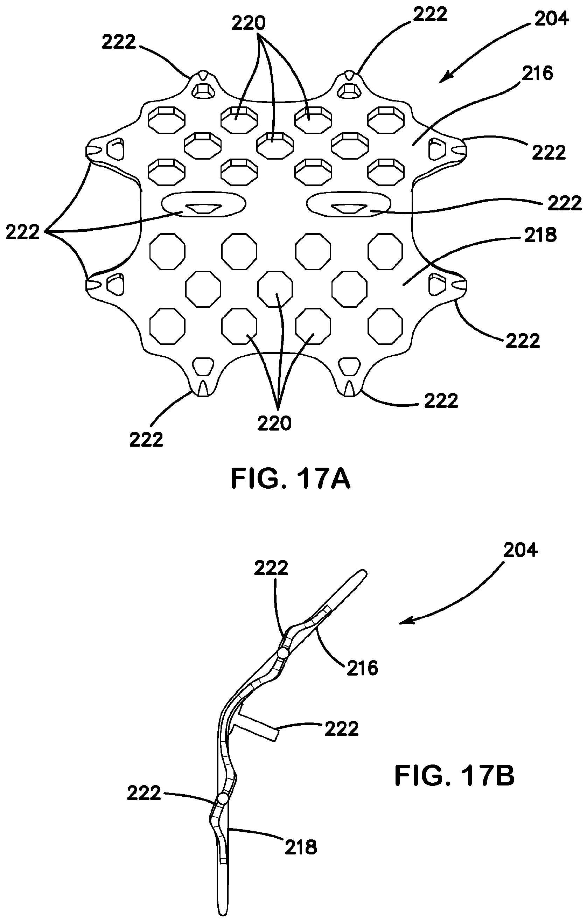

Turning now to FIGs. 17-19, the base 204 will now be described. The base 204 is made of rigid material and has two operational planes 216, 218 angled with respect to each other. The angled planes 216, 218 are connected at a common intersection in one variation. In another variation, the angle between the two planes 216, 218 is approximately 120 degrees. Any number of operational planes 216, 218 may be provided with each plane serving as a simulated tissue plane such that suture passing may be practiced across the angled surfaces. The base 204 has a top surface and a bottom surface defining a thickness therebetween. A plurality of apertures 220 are formed in the base 204 through the top surface and bottom surface. These apertures 220 may have any shape suitable for receiving tabs 206 in a variety of directions, orientations, angulations to provide a variety of suture pathways which will be described in greater detail below. In the variation shown, the apertures 220 are polygonal in shape, in particular, they are octagonal. The base 204 further includes a plurality of mating surfaces 222 configured for connection with the clips 208 on the stand 202. In one variation, the mating surfaces 222 are extensions paired for direct engagement with the pair of clips 208 on the stand 202. The mating surfaces 222 may include apertures for snapping into the clips and/or ribs for slidably mating within the channel 212 in the clips 208. A plurality of mating surfaces 222 along the edges of the base 204 is provided so that the base 204 may be connected to the stand 202 in any number of orientations. Also, mating surfaces 222 may be provided as extensions from the top surface or the bottom surface of base 204 to further increase the number of possible orientations. Various orientations of the base 204 with respect to the stand 202 are shown in FIGs. 18A-18C. Three orientations of the base 204 are shown in FIGs. 18A-18C. In one variation, pairs of mating surfaces 222 are provided along at least three locations on the base 204. For a sloped conformation of the base 204, mating surfaces 222 that are located along the straight edge of the base 204 are snapped into the clips 208 as shown in FIG. 18A. For a corner conformation of the base 204, mating surfaces 222 that are located along the angled edge of the base 204 are snapped into the clips 208 as shown in FIG. 18C. For a turtle-back-like conformation of the base 204 with respect to the stand 202, the mating surfaces 222 that are located on the bottom surface of the base 204 are snapped into the clips 208.

With reference to FIG. 19 another variation of the base 204 is shown. In this variation of the base 204, a hinge 224 is provided between the two planes 216, 218 to connect them in a manner such that the angle between the two planes 216, 218 is adjustable. The angle between the two planes 216, 218 is fixed with the help of a ratchet 226 provided on one or more sides of the base 204 and located between the two planes 216, 218 and the mating surfaces 222. The mating surfaces 222 are connected to the ratchet 226 such that they are suitably adjusted with a change in the angle between the two planes 216, 218. The mating surfaces 222 are elongate flat tabs configured to connect with the clips 208 on the stand 202. The hinged variation of the base 204 of FIG. 19 allows for a variety of planar angles for suturing practice.

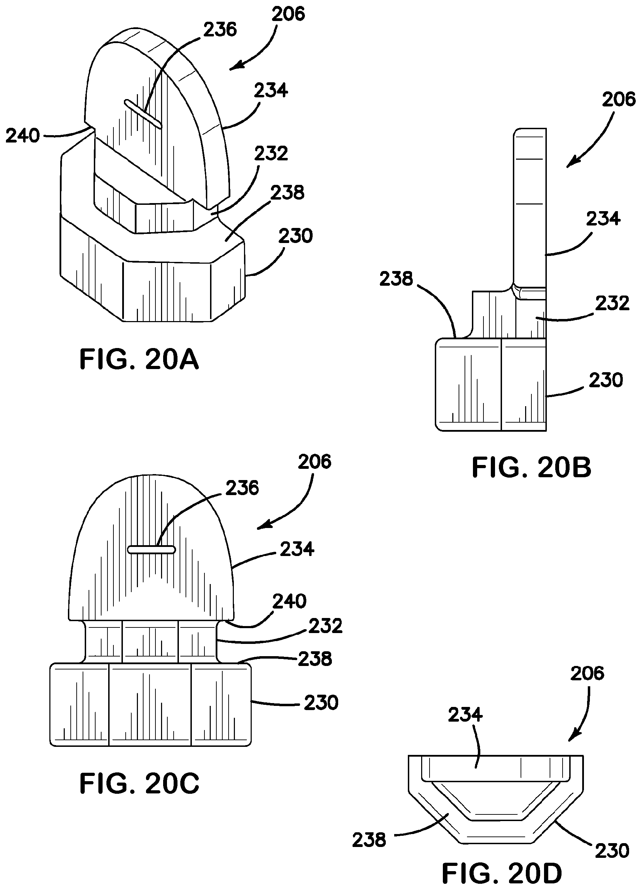

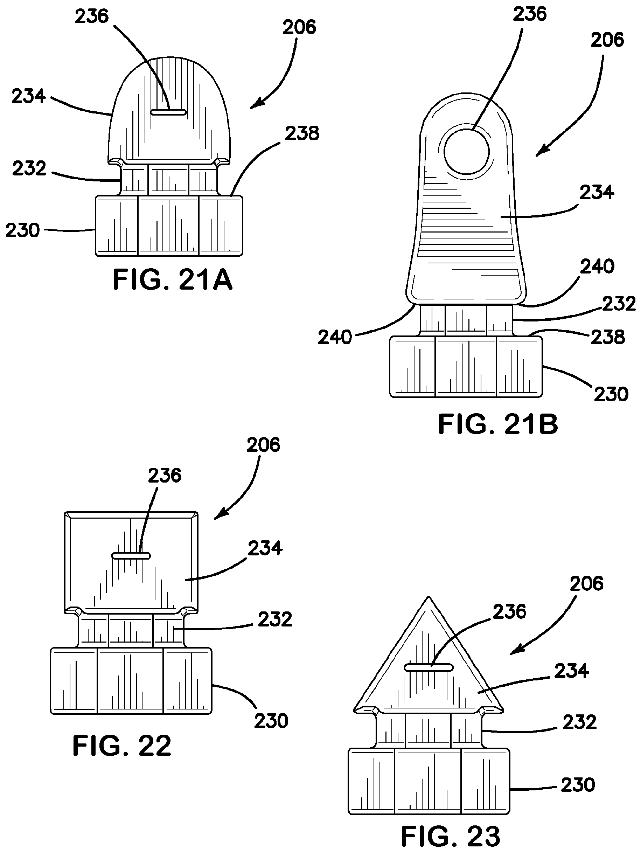

Turning now to FIGs. 20A-24, the tabs 206 will now be described in greater detail. Each tab 206 includes a tab base 230 interconnected with a tab face 234 by a tab neck 232. The tab base 230 has a shape in a cross-section taken perpendicular to the longitudinal axis of the tab 206 that substantially matches the shape or half the shape of the aperture 220 in the base 204 in which it is to be located. The tab base 230 is sized slightly larger than the apertures 220 and configured such that the tab base 230 can be inserted and removed from an aperture 220. When inserted into an aperture 220, the tab base 230 resides outside the aperture 220 and adjacent to the bottom surface of the base 204. In one variation, the tab 206 is made of soft compliant material, such as silicone, that mimics the consistency of real tissue. The silicone tabs 206 are easily deformed and pulled like real tissue making it suitable for practicing suturing and at the same time easily insertable into the apertures 220. The tab neck 232 has a shape in a cross-section taken perpendicular to the longitudinal axis of the tab 206 that substantially matches the shape or half the shape of the aperture 220 in which it is placed. A polygonal cross-sectional shape of the base neck 232 located inside a matching half or the full shape of the polygonal aperture 220 will be prevented from rotating inside the aperture 220 as opposed to a circular tab neck 232 inside a circular aperture 220. When placed inside the aperture 220, the tab neck 232 is substantially resident inside the aperture 220 between the top surface and the bottom surface of the base 204. The tab face 234 is resident above the top surface of the base 204. The tab face 234 includes at least one tab opening 236. The tab opening 236 may be any shape and size. In one variation, the tab opening 236 is a slit that is not readily apparent to the user. However, grasping the tab face 234 and pulling on it, as shown in FIG. 21B, elongates the tab face 234, and thereby, enlarges the tab opening 236 so that a suture may be passed through the tab opening 236. As such, the tab 206 has first configuration that is a relaxed configuration in which the tab opening 236 has a smaller first size and a second configuration that is stretched or elongated in which the tab opening 236 has a second size that is relatively larger. The elastic property of the tab material permits this tab to be moved from the first configuration to the second configuration. When the tab 236 is released from the second configuration, the tab 236 springs back to its relaxed first configuration. The tab opening 236 advantageously serves as a location to pass a suture wherein missing the tab opening 236 may serve as a means to measure the skill of the user. Also, the tab opening 236 helps to prevent the suture from tearing through the soft silicone of the tab face 234. In one variation, the tab face 234 is reinforced with mesh material to help hold a suture especially in a variation in which the tab face 234 does not including a tab opening 236. In such a variation, the tab face 234 is open to being pierced by the user in any location of the tab face 234. The transition between the tab base 230 and the tab neck 232 creates a ledge 238 around the tab 206 that prevents the tab 206 from being pulled proximally out of the aperture 220. Also, the transition between the tab neck 232 and the tab face 234 forms an undercut 240 that prevents the tab 206 from being pushed distally out of the aperture 220. Both the ledge 238 and undercut 240 help keep the tab 206, together with the faceted tab neck 232, which prevents rotation of the tab 206 relative to the base, securely yet removably, attached to the base 204 and capable of withstanding pulls and tugs associated with the suturing procedure.

A plurality of tabs 206 are typically inserted in various apertures 220 randomly selected throughout the base 204 or inserted in a predetermined fashion and configuration to create a predetermined suture pathway which can be associated with a particular level of difficulty for improving skill or mimicking a particular suture pathway likely to be encountered in a real surgical procedure. As such, any number of tabs 206 may be inserted into the base 204. Some apertures 220 may be left without tabs as desired. Approximately ten tabs 206 are inserted into the base 204 to create a prolonged practice session. Color-coded tabs 206 may be employed for the user to discern a predetermined suture pathway in which only red colored tabs 206 are to be pierced, for example, in a suture training exercise.

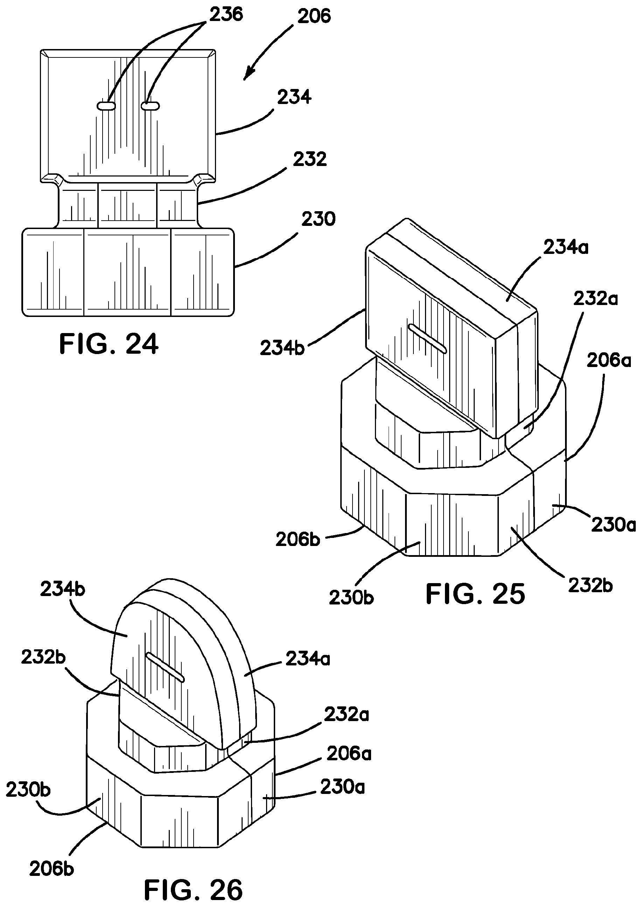

Furthermore, with particular reference to FIGs. 22-24, the tab face 234 is configured with a shape in cross-section perpendicular to the longitudinal axis that is polygonal such as square, rectangular, as shown in FIG. 22, and triangular as shown in FIG. 23. Any shape such as circular, curved, elliptical are also within the scope of the present invention. The tabs 206 are designed in a variety of shapes and sizes to provide a variety of feature shapes for grasping, pulling and manipulating as well as a variety of tab opening 236 sizes and shapes. The tab opening 236 in FIGs. 22-23 is an elongated slit that has long axis and a short axis with the long axis substantially perpendicular to the longitudinal axis of the tab. In another variation, the slit is elongated at an angle or substantially parallel to the longitudinal axis. The tab opening 236 may have a long axis of approximately 6.35mm (0.25 inches) long, 3.175mm (0.125 inches) long, 1.59mm (0.0625) inches long, and 0.794mm (0.03125 inches) in length for example. FIG. 24 also illustrates a variation of the face 234 that has more than one tab opening 236. In particular, two openings 236 in the shape of slits are located side-by-side and substantially along a line perpendicular to the longitudinal axis. These two side-by-side slits are each approximately 0.794mm (0.03125 inches) in length.

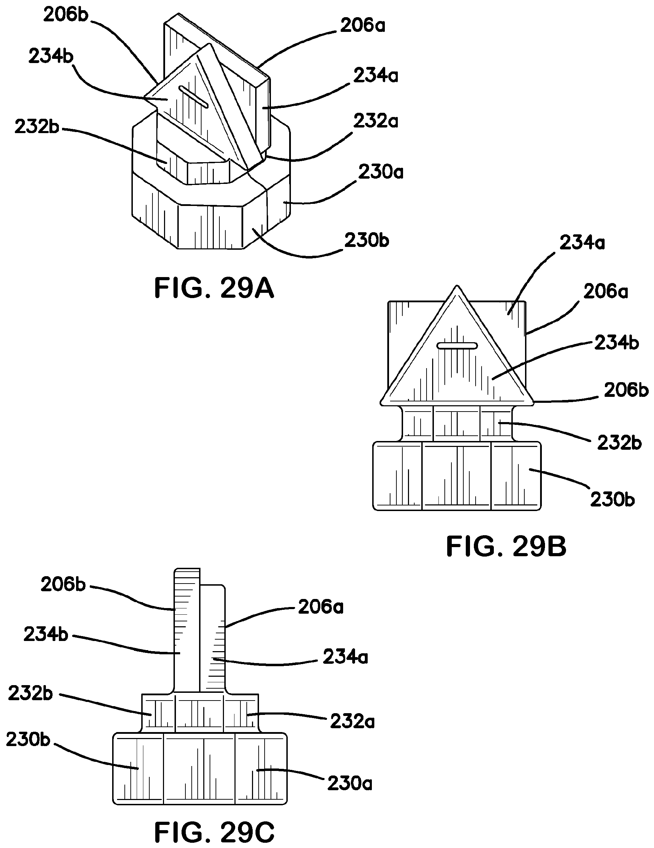

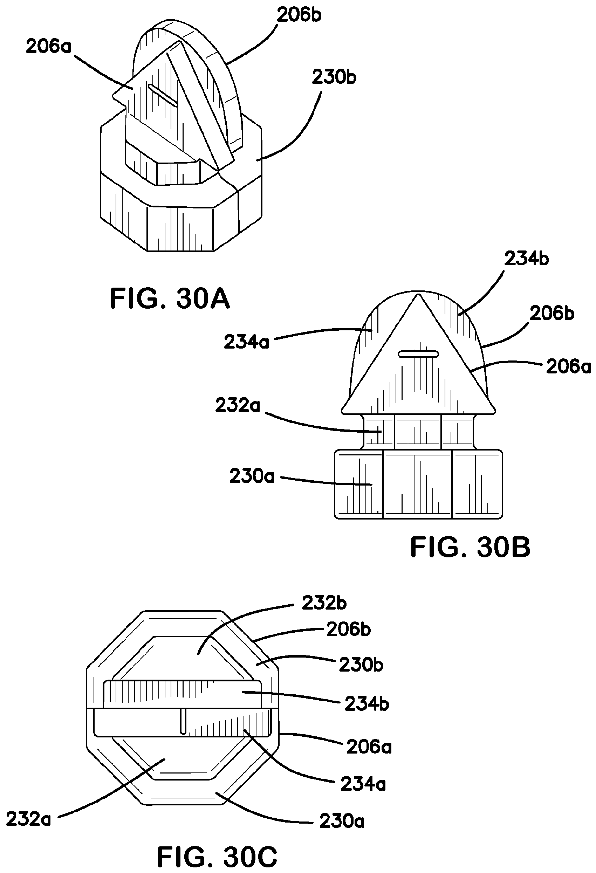

In one variation of the tab 206 shown in FIGs. 20A-20D, the tab base 230 and tab neck 232 are approximately half the size and shape of a base aperture 220. This configuration permits two half tabs 206a, 206b to be placed side-by-side, back-to-back inside the same base opening 220 as shown in FIGs. 25-30. The tabs 206 are configured with a size and shape that facilitates secure attachment to the base 204 through friction and geometric constraints. The tabs 206 are kept from rotating inadvertently within the apertures 220 of the base 204 by the shape of the tab neck 232 wherein the corners of the trapezoid and/or polygon of the tab neck 232 hinder rotation out of the corners of the polygonal/octagonal aperture 220 of the openings 220 in the base 204 when the corners of the tab neck 232 are located within corresponding corners of the polygonal aperture 220. Furthermore, the octagonal shape of the aperture 220 and the corresponding shape of the tab neck 232 allow for four rotational orientations of the tabs 206 with a base aperture 220, and therefore, advantageously, a plurality of suture pathways and approach orientations for varied practice, that is, the tab 206 can be inserted in a first orientation defined along twelve o'clock and six o'clock and removed and re-inserted in a second orientation defined along a nine o'clock and three o'clock position and re-inserted in a third orientation defined along approximately the two-o'clock and the eight o'clock position and a fourth orientation defined along approximately the ten o'clock and four o'clock position.

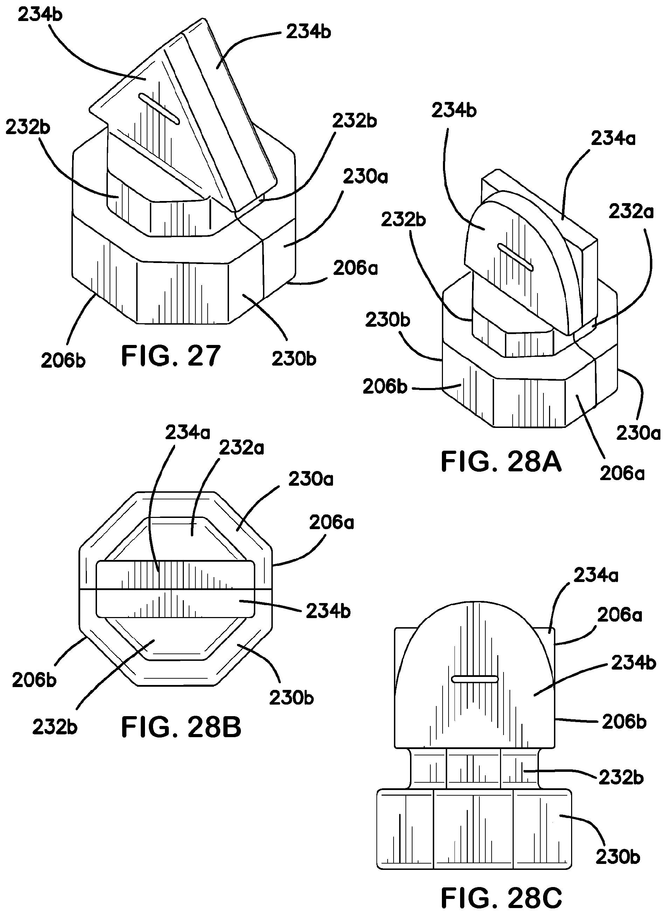

With continued reference to FIGs. 25-30, in the variation in which the tab 206 comprises a first half tab 206 and a second half tab 206b, the first half tab 206a has a tab base 230a and tab neck 232a having a first shape and the second half tab 206b has a tab base 230b and a tab neck 232b having a second shape. Both the first shape and the second shape complement each other at the adjoining surface and complete the full peripheral shape of the base aperture 220. Since two half tabs 206a, 206b are inserted into a single aperture 220, the skill level is advantageously increased or the practice made more difficult by arrangement of different tabs 206 side-by-side. For example, one half tab 206a may have no tab openings 236 thereby concealing a tab opening 236 in an adjacent half tab 206b. In another example, the half-tabs 206a, 206b may be of different color so that a practice exercise instruction would be to suture through the tabs of the same color requiring the user to grasp the tab 206 of the correct color. Furthermore, grasping half-tabs 206a, 206b that are located side-by-side in a base aperture 220 is more difficult than grasping a single tab 206 inside a base aperture 220. Also, two half tabs 206a, 206b side-by-side inside a single base aperture 220 may have tab faces 234a, 234b that are the same as shown in FIGs. 25, 26 and 27 in which the tab faces 234a, 234b are polygonal, curved, and triangular, respectively. In another variation, two half tabs 206a, 206b side-by-side inside a single base aperture 220 may have tab faces 234a, 234b that different from each other. For example, in FIGs. 28, 29 and 30, tab face 234a is polygonal and tab face 234b is curved, tab face 234a is polygonal and tab face 234b is triangular, and tab face 234a is triangular and tab face 234b is curved, respectively. If the tab faces 234a, 234b are the same, the skill level in differentiating the two tab faces from each other is increased as well as the difficulty in grasping one of them as opposed to a variation in which only one tab face 234 is provided within a single base aperture 220. Grasping the surfaces of tab face 234a or 234b is discernible as the overlapping portions of the differently shaped adjacent tab face as can be seen in FIGs. 28C, 29B and 30B. Of course, in another variation, a single tab 206 may be provided with two upstanding tab faces 234 having different tab opening 236 configurations and/or shapes of tab faces 234 while sharing a common tab base 230 and tab neck 232.

While certain embodiments have been particularly shown and described with reference to exemplary embodiments thereof, it will be understood by those of ordinary skill in the art that various changes in form and details may be made therein without departing from the scope of the following claims.

## Claims

1. A suture training model, comprising:
a base (102, 204) having a top surface and a bottom surface; a plurality of openings (110, 220) being formed in the base (102, 204) extending between the top surface and the bottom surface; and
**characterized by** a plurality of suture tabs (206) sized and configured to be inserted into the plurality of openings (110, 220); the plurality of suture tabs (206) having a first side interconnected with a second side; each of the plurality of suture tabs (206) having a top portion and a bottom portion; the plurality of suture tabs (206) being made of elastic material having a resting configuration and an elongated configuration along a longitudinal axis; each of the plurality of suture tabs (206) located inside one of the plurality of openings (110, 220) is movable between the resting configuration and the elongated configuration by pulling a proximal end of the top portion upwardly relative to the top surface of the base,
wherein the top portion includes a tab face (234) and the bottom portion includes a tab base (230) interconnected by a tab neck (232); the tab neck (232) being sized and configured to reside inside one of the plurality of openings (110, 220) in the base (102, 204); the tab base (230) being wider than the tab neck (232) so as to prevent the suture tab (206) from being pulled proximally through the opening (110, 220), and
wherein each tab face (234) of the plurality of suture tabs (206) includes at least one pre-formed aperture (236) or defines a penetrable region that is pierceable with a suture needle to practice suturing and suture passing techniques.

2. The suture training model of claim 1 wherein each suture tab (206) defines a ledge (238) between the tab base (230) and the tab neck (232) extending around at least a portion of the suture tab; the ledge (238) abutting the bottom surface of the base to prevent the suture tab from being pulled proximally out of the opening (110, 220).

3. The suture training model of claim 1 wherein each suture tab (206) defines an undercut (240) between the tab face (234) and the tab neck (232) preventing the suture tab (206) from being pushed distally out of the opening (110, 220).

4. The suture training model of claim 1 wherein when a suture tab (206) is inserted into an opening (110, 220), the tab neck (232) is resident inside the opening between the top surface and bottom surface of the base while the tab base (230) resides outside the opening adjacent to the bottom surface of the base.

5. The suture training model of claim 1 wherein the plurality of suture tabs (206) are retained in the base (102, 204) and stretched in length when in the elongated configuration; the plurality of suture tabs (206) tend to return to the resting configuration when released from the elongated configuration.

6. The suture training model of claim 1 wherein the at least one pre-formed aperture (236) extending laterally between the first side and the second side through the tab face (234), wherein moving the suture tab (204) from the resting configuration to the elongated configuration enlarges the aperture (236) of the suture tab being moved.

7. The suture training model of claim 6 wherein the at least one pre-formed aperture (236) comprises an elongate slit having a long axis and a short axis; the long axis of the slit being substantially perpendicular to, angled at an angle, or substantially parallel to the longitudinal axis of the suture tab.

8. The suture training model of claim 1 wherein the penetrable region is defined between the first side and the second side of the tab face (234); the penetrable region being reinforced with mesh material for help in holding a suture.

9. The suture training model of claim 1 wherein when pulling the suture tab (206) into the elongated configuration, the bottom portion of the suture tab, including the tab base (230) and the tab neck (232), is retained with respect to the base (102, 204) and the length of the suture tab along the longitudinal axis is increased in the elongated configuration relative to the resting configuration.

10. The suture training model of claim 1 wherein each of the tab base (230) and the tab neck (232) has a cross-sectional shape in a plane perpendicular to the longitudinal axis of the suture tab, the cross-sectional shape of the tab base and tab neck matching substantially a shape or half shape of the opening in which the suture tab being inserted.

11. The suture training model of claim 1 wherein the tab face (234) of each of the plurality of suture tabs extends above the top surface of the base when residing inside one of the plurality of openings (110, 220) of the base.

12. The suture training model of claim 1 wherein some of the plurality of openings (110, 220) are sized and configured to permit more than one fixed orientation of the suture tab about its longitudinal axis with respect to the base.

13. The suture training model of claim 1 wherein some of the plurality of openings (110, 220) in the base are sized and configured to receive two suture tabs (206a, 206b) in one opening; the two suture tabs (206a, 206b) being removably located side-by-side inside the one opening; the two suture tabs (206a, 206b) having top portions with the same shape or different shapes and are movable from the resting configuration to the elongated configuration independently of each other.

14. The suture training model of claim 1 wherein the top surface of the base is parallel to the bottom surface of the base to define a substantially planar structure having a thickness; the base (102, 204) further including at least one angle to form at least two planes (112a, 112b, 216, 218) with the plurality of openings (110, 220) holding the plurality of suture tabs (206); wherein the at least two planes (112a, 112b, 216, 218) are hinged with respect to each other so that the angle between the at least two planes can be changed.

15. The suture training model of claim 1 further including a stand (146, 202) configured to hold the base (102, 204); wherein the base (102, 204) is removably interconnectable to the stand (146, 202) via mating features (142, 208); the mating features (142, 208) being configured to interconnect the base (102, 204) and stand (146, 202) together at one or more orientation of the base with respect to the stand.

## Patentansprüche

1. Nahttrainingsmodell, umfassend:
eine Basis (102, 204) mit einer Oberseite und einer □nterseite; eine Mehrzahl von Öffnungen (110, 220), die in der Basis (102, 204) ausgebildet sind und sich zwischen der Oberseite und der □nterseite erstrecken; und
**gekennzeichnet durch** eine Mehrzahl von Nahtlaschen (206), die dimensioniert und dazu konfiguriert sind, in die Mehrzahl von Öffnungen (110, 220) eingeführt zu werden; wobei die Mehrzahl von Nahtlaschen (206) eine erste Seite aufweist, die mit einer zweiten Seite verbunden ist; wobei jede der Mehrzahl von Nahtlaschen (206) einen oberen Abschnitt und einen unteren Abschnitt aufweist; wobei die Mehrzahl von Nahtlaschen (206) aus elastischem Material mit einer Ruhekonfiguration und einer länglichen Konfiguration entlang einer Längsachse hergestellt ist; wobei jede der Mehrzahl von Nahtlaschen (206), die sich innerhalb einer der Mehrzahl von Öffnungen (110, 220) befindet, zwischen der Ruhekonfiguration und der länglichen Konfiguration durch nach oben gerichtetes Ziehen eines proximalen Endes des oberen Abschnitts relativ zu der Oberseite der Basis beweglich ist,
wobei der obere Abschnitt eine Laschenfläche (234) beinhaltet und der untere Abschnitt eine Laschenbasis (230) beinhaltet, die durch einen Laschenhals (232) miteinander verbunden sind; wobei der Laschenhals (232) dimensioniert und dazu konfiguriert ist, in einer der Mehrzahl von Öffnungen (110, 220) in der Basis (102, 204) zu sitzen; wobei die Laschenbasis (230) breiter ist als der Laschenhals (232), um zu verhindern, dass die Nahtlasche (206) proximal durch die Öffnung (110, 220) gezogen wird, und
wobei jede Laschenfläche (234) der Mehrzahl von Nahtlaschen (206) wenigstens ein vorgeformtes Loch (236) beinhaltet oder einen durchdringbaren Bereich definiert, der mit einer Nahtnadel durchstochen werden kann, um Näh- und Nahtdurchführungstechniken zu üben.

2. Nahttrainingsmodell nach Anspruch 1, wobei jede Nahtlasche (206) eine Leiste (238) zwischen der Laschenbasis (230) und dem Laschenhals (232) definiert, die sich um wenigstens einen Abschnitt der Nahtlasche erstreckt; wobei die Leiste (238) an der □nterseite der Basis anliegt, um zu verhindern, dass die Nahtlasche proximal aus der Öffnung (110, 220) gezogen wird.

3. Nahttrainingsmodell nach Anspruch 1, wobei jede Nahtlasche (206) eine □nterschneidung (240) zwischen der Laschenfläche (234) und dem Laschenhals (232) definiert, die verhindert, dass die Nahtlasche (206) distal aus der Öffnung (110, 220) herausgedrückt wird.

4. Nahttrainingsmodell nach Anspruch 1, wobei, wenn eine Nahtlasche (206) in eine Öffnung (110, 220) eingeführt wird, der Laschenhals (232) innerhalb der Öffnung zwischen der Oberseite und der □nterseite der Basis verbleibt, während die Laschenbasis (230) außerhalb der Öffnung neben der □nterseite der Basis verbleibt.

5. Nahttrainingsmodell nach Anspruch 1, wobei die Mehrzahl von Nahtlaschen (206) in der Basis (102, 204) gehalten und in Längsrichtung gestreckt wird, wenn sie sich in der gestreckten Konfiguration befindet; die Mehrzahl von Nahtlaschen (206) dazu neigen, in die Ruhekonfiguration zurückzukehren, wenn sie aus der gestreckten Konfiguration gelöst werden.

6. Nahttrainingsmodell nach Anspruch 1, wobei sich die wenigstens eine vorgeformte Apertur (236) seitlich zwischen der ersten Seite und der zweiten Seite durch die Laschenfläche (234) erstreckt, wobei das Bewegen der Nahtlasche (204) aus der Ruhekonfiguration in die längliche Konfiguration die Apertur (236) der Nahtlasche, die bewegt wird, vergrößert.

7. Nahttrainingsmodell nach Anspruch 6, wobei die wenigstens eine vorgeformte Apertur (236) einen länglichen Schlitz mit einer langen Achse und einer kurzen Achse umfasst; wobei die lange Achse des Schlitzes im Wesentlichen senkrecht zu, in einem Winkel abgewinkelt oder im Wesentlichen parallel zu der langen Achse der Nahtlasche verläuft.

8. Nahttrainingsmodell nach Anspruch 1, wobei der durchdringbare Bereich zwischen der ersten Seite und der zweiten Seite der Laschenfläche (234) definiert ist; wobei der durchdringbare Bereich mit Maschenmaterial verstärkt ist, um das Halten einer Naht zu unterstützen.

9. Nahttrainingsmodell nach Anspruch 1, wobei beim Ziehen der Nahtlasche (206) in die längliche Konfiguration der untere Abschnitt der Nahtlasche, der die Laschenbasis (230) und den Laschenhals (232) beinhaltet, in Bezug auf die Basis (102, 204) gehalten wird und die Länge der Nahtlasche entlang der Längsachse in der länglichen Konfiguration relativ zu der Ruhekonfiguration vergrößert wird.

10. Nahttrainingsmodell nach Anspruch 1, wobei die Laschenbasis (230) und der Laschenhals (232) jeweils eine Querschnittsform in einer Ebene senkrecht zu der Längsachse der Nahtlasche aufweist, wobei die Querschnittsform der Laschenbasis und des Laschenhalses im Wesentlichen einer Form oder Halbform der Öffnung entspricht, in die die Nahtlasche eingeführt wird.

11. Nahttrainingsmodell nach Anspruch 1, wobei sich die Laschenfläche (234) jeder der Mehrzahl von Nahtlaschen über die Oberseite der Basis erstreckt, wenn sie sich innerhalb einer der Mehrzahl von Öffnungen (110, 220) der Basis befindet.

12. Nahttrainingsmodell nach Anspruch 1, wobei einige der Mehrzahl von Öffnungen (110, 220) dimensioniert und dazu konfiguriert sind, mehr als eine feste Ausrichtung der Nahtlasche um ihre Längsachse in Bezug auf die Basis zu ermöglichen.

13. Nahttrainingsmodell nach Anspruch 1, wobei einige der Mehrzahl von Öffnungen (110, 220) in der Basis dimensioniert und dazu konfiguriert sind, zwei Nahtlaschen (206a, 206b) in einer Öffnung aufzunehmen; wobei sich die zwei Nahtlaschen (206a, 206b) entfernbar nebeneinander innerhalb der einen Öffnung befinden; wobei die zwei Nahtlaschen (206a, 206b) obere Abschnitte mit derselben Form oder unterschiedlichen Formen aufweisen und unabhängig voneinander aus der Ruhekonfiguration in die längliche Konfiguration beweglich sind.

14. Nahttrainingsmodell nach Anspruch 1, wobei die Oberseite der Basis parallel zu der □nterseite der Basis verläuft, um eine im Wesentlichen ebene Struktur mit einer Dicke zu definieren; wobei die Basis (102, 204) ferner wenigstens einen Winkel beinhaltet, um wenigstens zwei Ebenen (112a, 112b, 216, 218) mit der Mehrzahl von Öffnungen (110, 220) auszubilden, die die Mehrzahl von Nahtlaschen (206) halten; wobei die wenigstens zwei Ebenen (112a, 112b, 216, 218) in Bezug zueinander gelenkig sind, sodass der Winkel zwischen den wenigstens zwei Ebenen verändert werden kann.

15. Nahttrainingsmodell nach Anspruch 1, das ferner einen Ständer (146, 202) beinhaltet, der dazu konfiguriert ist, um die Basis (102, 204) zu halten; wobei die Basis (102, 204) entfernbar mit dem Stand (146, 202) über Paarungsmerkmale (142, 208) verbunden werden kann; wobei die Paarungsmerkmale (142, 208) dazu konfiguriert sind, die Basis (102, 204) und den Stand (146, 202) zusammen an einer oder mehreren Ausrichtungen der Basis in Bezug auf den Stand zu verbinden.

## Revendications

1. Modèle d'apprentissage de suture, comprenant :
une base (102, 204) ayant une surface supérieure et une surface inférieure ; une pluralité d'ouvertures (110, 220) étant formées dans la base (102, 204) s'étendant entre la surface supérieure et la surface inférieure ; et
**caractérisé par** une pluralité de languettes de suture (206) dimensionnées et configurées pour être insérées dans la pluralité d'ouvertures (110, 220) ; la pluralité de languettes de suture (206) ayant un premier côté interconnecté avec un deuxième côté ; chacune de la pluralité de languettes de suture (206) ayant une partie supérieure et une partie inférieure ; la pluralité de languettes de suture (206) étant fabriquées en une matière élastique ayant une configuration de repos et une configuration allongée le long d'un axe longitudinal ; chacune de la pluralité de languettes de suture (206) située à l'intérieur de l'une de la pluralité d'ouvertures (110, 220) est amovible entre la configuration de repos et la configuration allongée en tirant une extrémité proximale de la partie supérieure vers le haut par rapport à la surface supérieure de la base,
dans lequel la partie supérieure comprend une face de languette (234) et la partie inférieure comprend une base de languette (230) interconnectée par un col de languette (232) ; le col de languette (232) étant dimensionné et configuré pour résider à l'intérieur de l'une de la pluralité d'ouvertures (110, 220) dans la base (102, 204) ; la base de languette (230) étant plus large que le col de languette (232) de manière à empêcher que la languette de suture (206) ne soit tirée proximalement à travers l'ouverture (110, 220), et
dans lequel la face de languette (234) de la pluralité de languettes de suture (206) comprend au moins un orifice préformé (236) ou définit une région pénétrable qui peut être percée avec une aiguille de suture pour pratiquer la suture et des techniques de passage de suture.

2. Modèle d'apprentissage de suture selon la revendication 1, dans lequel chaque languette de suture (206) définit un rebord (238) entre la base de languette (230) et le col de languette (232) s'étendant autour d'une partie au moins de la languette de suture ; le rebord (238) aboutant la surface inférieure de la base pour empêcher que la languette de suture ne soit tirée proximalement hors de l'ouverture (110, 220).

3. Modèle d'apprentissage de suture selon la revendication 1, dans lequel chaque languette de suture (206) définit une entaille (240) entre la face de languette (234) et le col de languette (232) empêchant la languette de suture (206) d'être poussée distalement hors de l'ouverture (110, 220).

4. Modèle d'apprentissage de suture selon la revendication 1, dans lequel lorsqu'une languette de suture (206) est insérée dans une ouverture (110, 220), le col de languette (232) réside à l'intérieur de l'ouverture entre la surface supérieure et la surface inférieure de la base tandis que la base de languette (230) réside hors de l'ouverture adjacente à la surface inférieure de la base.

5. Modèle d'apprentissage de suture selon la revendication 1, dans lequel la pluralité de languettes de suture (206) sont retenues dans la base (102, 204) et étirées en longueur lorsque dans la configuration allongée ; la pluralité de languettes de suture (206) ont tendance à retourner à la configuration de repos lorsque relâchées de la configuration allongée.

6. Modèle d'apprentissage de suture selon la revendication 1, dans lequel le au moins un orifice préformé (236) s'étendant latéralement entre le premier côté et le deuxième côté à travers la face de languette (234), dans lequel déplacer la languette de suture (204) de la configuration de repos à la configuration allongée élargit l'orifice (236) de la languette de suture étant déplacée.

7. Modèle d'apprentissage de suture selon la revendication 6, dans lequel le au moins un orifice préformé (236) comprend une fente allongée ayant un axe long et un axe court ; l'axe long de la fente étant sensiblement perpendiculaire, incliné à un angle, ou sensiblement parallèle à l'axe longitudinal de la languette de suture.

8. Modèle d'apprentissage de suture selon la revendication 1, dans lequel la région pénétrable est définie entre le premier côté et le deuxième côté de la face de languette (234) ; la région pénétrable étant renforcée avec un matériau en maille pour aider à tenir une suture.

9. Modèle d'apprentissage de suture selon la revendication 1, dans lequel en tirant la languette de suture (206) dans la configuration allongée, la partie inférieure de la languette de suture, y compris la base de languette (230) et le col de languette (232), est retenue par rapport à la base (102, 204) et la longueur de la languette de suture le long de l'axe longitudinal est augmentée dans la configuration allongée par rapport à la configuration de repos.

10. Modèle d'apprentissage de suture selon la revendication 1, dans lequel chacun de la base de languette (230) et du col de languette (232) a une forme en coupe transversale dans un plan perpendiculaire à l'axe longitudinal de la languette de suture, la forme en coupe transversale de la base de languette et du col de languette correspondant sensiblement à une forme ou demi-forme de l'ouverture dans laquelle la languette de suture est insérée.

11. Modèle d'apprentissage de suture selon la revendication 1, dans lequel la face de languette (234) de chacune de la pluralité de languettes de suture s'étend au-dessus de la surface supérieure de la base lorsque résidant à l'intérieur de l'une de la pluralité d'ouvertures (110, 220) de la base.

12. Modèle d'apprentissage de suture selon la revendication 1, dans lequel certaines de la pluralité d'ouvertures (110, 220) sont dimensionnées et configurées pour permettre plus d'une orientation fixe de la languette de suture autour de son axe longitudinal par rapport à la base.

13. Modèle d'apprentissage de suture selon la revendication 1, dans lequel certaines de la pluralité d'ouvertures (110, 220) dans la base sont dimensionnées et configurées pour recevoir deux languettes de suture (206a, 206b) dans une ouverture ; les deux languettes de suture (206a, 206b) étant situées côte à côte de manière amovible à l'intérieur de l'une ouverture ; les deux languettes de suture (206a, 206b) ayant des parties supérieures ayant la même forme ou des formes différentes et elles sont amovibles de la configuration de repos à la configuration allongée indépendamment l'une de l'autre.

14. Modèle d'apprentissage de suture selon la revendication 1, dans lequel la surface supérieure de la base est parallèle à la surface inférieure de la base pour définir une structure sensiblement plane ayant une épaisseur ; la base (102, 204) comprenant en outre au moins un angle pour former au moins deux plans (112a, 112b, 216, 218) avec la pluralité d'ouvertures (110, 220) tenant la pluralité de languettes de suture (206) ; dans lequel les au moins deux plans (112a, 112b, 216, 218) sont articulés l'un par rapport à l'autre de sorte que l'angle entre les au moins deux plans peut être changé.

15. Modèle d'apprentissage de suture selon la revendication 1, comprenant en outre un support (146, 202) configuré pour tenir la base (102, 204) ; dans lequel la base (102, 204) peut être interconnectée au support (146, 202) de manière amovible via des éléments d'accouplement (142, 208) ; les éléments d'accouplement (142, 208) étant configurés pour interconnecter la base (102, 204) et le support (146, 202) ensemble à une ou plusieurs orientations de la base par rapport au support.
